# EUROPEAN PATENT APPLICATION

(11) **EP 4 276 562 A1**
(43) Date of publication of application: **15.11.2023**
(21) Application number: 21917510.6
(22) Date of filing: 08.01.2021
(51) Int. Cl.: G05D 1/02

(54) **TRANSPORT SYSTEM AND TRANSPORT CONTROL METHOD**

(71) Applicant: Lexxpluss, Inc., Kawasaki-ku, Kawasaki City Kanagawa 2100007 (JP)
(72) Inventor: MIURA, Yasuyuki, Kawasaki City, Kanagawa 210-0007 (JP); ASO, Masaya, Kawasaki City, Kanagawa 210-0007 (JP); TANAKA, Alex, Kawasaki-si, Kanagawa 212-0032 (JP)
(74) Representative: Osterhoff, Utz
(86) International application number: PCT/JP2021/000572
(87) International publication number: WO 2022/149284

(57) **Abstract**

[Problems] There have been problems in that with a guided traveling-basis system under which traveling is performed along a guide line, the guide line needs to be laid in an operation area of a conveyance system, and in that with an autonomous traveling-basis system, operation reproducibility is lower than that with the guided traveling-basis system.

[Solution] A conveyance system according to the present disclosure includes a host vehicle position estimation unit that detects at least one of a traveled distance of a conveyance vehicle and a position of the host vehicle, and a control switching unit that switches, when the traveled distance or the position of the host vehicle detected by the host vehicle position estimation unit falls within a preset range while the conveyance vehicle is being controlled by an autonomous traveling control unit, a control mode from traveling control by the autonomous traveling control unit to traveling control by a guided traveling control unit.

## Description

### Field

The present disclosure relates to a conveyance system and a conveyance control method.

### Background

In recent years, autonomous unmanned conveyance vehicles have been practically used for conveying load within facilities such as factories and warehouses. Patent Literature 1 and the like disclose an example of a guidance-basis control technique of making an unmanned conveyance vehicle travel to a predetermined destination on a predetermined rail track laid in a facility. Patent Literature 2 and the like disclose an autonomous traveling-basis technique of performing traveling control to a destination through self-position estimation and environmental mapping.

### Citation List

### Patent Literature

Patent Literature 1: Japanese Patent Application Laid-open No. 11-305837
Patent Literature 2: Japanese Patent Application Laid-open No. 2012-093811

### Summary

### Technical Problem

The guided traveling-basis technique as described in Patent Literature 1 requires a guide line to be laid over the entire traveling area of a conveyance vehicle. This means that many procedures are required for introducing this conveyance system. Furthermore, many procedures are also required when making a change such as changing the track of the conveyance vehicle after the laying of a guide line and the like have been completed. Thus, the system is difficult to introduce and change. On the other hand, the autonomous traveling-basis technique as described in Patent Literature 2 has a problem of poor operation reproducibility as compared with the guidance-basis technique.

The present disclosure is made in view of the above problems, and an object of the present disclosure is to provide a conveyance system and a conveyance control method covering both the guided traveling-basis and the autonomous traveling-basis functions.

### Solution to Problem

The present disclosure provides a conveyance system including: a guide line detection unit configured to detect a guide line laid on a traveling road; a guided traveling control unit configured to make a conveyance vehicle travel along the guide line; a host vehicle position estimation unit configured to detect at least one of a traveled distance and a host vehicle position of the conveyance vehicle; an autonomous traveling control unit configured to make the conveyance vehicle travel to a predetermined target position based on detection information from the host vehicle position estimation unit; and a control switching unit configured to switch, when the traveled distance or the host vehicle position detected by the host vehicle position estimation unit falls within a preset range while traveling of the conveyance vehicle is being controlled by the autonomous traveling control unit, a control mode from traveling control by the autonomous traveling control unit to traveling control by the guided traveling control unit.

The present disclosure provides a conveyance system including: a guide line detection unit configured to detect a guide line laid on a traveling road; a guided traveling control unit configured to make a conveyance vehicle travel along the guide line; a host vehicle position estimation unit configured to detect at least one of a traveled distance and a host vehicle position of the conveyance vehicle; and an autonomous traveling control unit configured to make the conveyance vehicle travel to a predetermined target position based on detection information from the host vehicle position estimation unit, in which the guide line is formed by a plurality of codes including two-dimensional codes or bar codes, while traveling of the conveyance vehicle is being controlled by the autonomous traveling control unit, the guide line detection unit detects the guide line and acquires code information of the codes, and the host vehicle position estimation unit detects the host vehicle position based on the code information acquired, and the autonomous traveling control unit makes the conveyance vehicle travel based on the host vehicle position detected based on the code information.

The present disclosure provides a conveyance control method including: a guide line detection step of detecting a guide line laid on a traveling road; a guided traveling control step of making a conveyance vehicle travel along the guide line; a host vehicle position estimation step of detecting at least one of a traveled distance and a host vehicle position of the conveyance vehicle; an autonomous traveling control step of making the conveyance vehicle travel to a predetermined target position based on at least one of the traveled distance and the host vehicle position detected in the host vehicle position estimation step; and a control switching step of switching, when the traveled distance or the host vehicle position detected in the host vehicle position estimation step falls within a preset range while traveling of the conveyance vehicle is being controlled in the autonomous traveling control step, a control mode from traveling control in the autonomous traveling control step to traveling control in the guided traveling control step.

The present disclosure provides a conveyance control method including: a guide line detection step of detecting a guide line laid on a traveling road; a guided traveling control step of making a conveyance vehicle travel along the guide line; a host vehicle position estimation step of detecting at least one of a traveled distance and a host vehicle position of the conveyance vehicle; and an autonomous traveling control step of making the conveyance vehicle travel to a predetermined target position based on at least one of the traveled distance and the host vehicle position detected in the host vehicle position estimation step, in which the guide line is formed by a plurality of codes including two-dimensional codes or bar codes, the method further includes a step of detecting a host vehicle position based on the code information acquired by detecting the guide line, and the autonomous traveling control step makes the conveyance vehicle travel based on the host vehicle position detected based on the code information.

### Advantageous Effects of Invention

The present disclosure can provide a conveyance system and a conveyance control method that enable the conveyance system to be relatively easily introduced and changed, and can improve the operation reproducibility.

### Brief Description of Drawings

FIG. 1 is a diagram illustrating an example of an operation area of a conveyance system according to an embodiment of the present invention.
FIG. 2 is a diagram illustrating an example of a configuration of a guided traveling area 110 according to the embodiment.
FIG. 3 is a diagram illustrating an example of a configuration of a guided traveling area 130 according to the embodiment.
FIG. 4 is a diagram illustrating an example of a configuration of a guided traveling area 140 according to the embodiment.
FIG. 5 is a perspective view illustrating an example of a hardware configuration of a conveyance vehicle according to the embodiment.
FIG. 6 is a top view illustrating the example of the hardware configuration of the conveyance vehicle according to the embodiment.
FIG. 7 is a bottom view illustrating the example of the hardware configuration of the conveyance vehicle according to the embodiment.
FIG. 8 is a diagram illustrating an example of a hardware configuration when the conveyance vehicle according to the embodiment and a cart towed are coupled.
FIG. 9 is a diagram illustrating another example of the hardware configuration when the conveyance vehicle according to the embodiment and the cart towed are coupled.
FIG. 10 is a diagram illustrating an overall configuration of the conveyance system according to the embodiment.
FIG. 11 is a diagram illustrating an example of a functional configuration of the conveyance vehicle according to the embodiment.
FIG. 12 is a diagram illustrating an example of a series of operation scenarios of the conveyance vehicle according to the embodiment for reciprocation between a work area 133 and a work area 114.
FIG. 13 is a diagram illustrating an example of a series of operation scenarios of the conveyance vehicle according to the embodiment for reciprocation between a work area 133 and a work area 143.
FIG. 14 is a diagram illustrating an operation example performed by the conveyance vehicle according to the embodiment to detect a guide line.
FIG. 15 is a diagram illustrating a first operation example performed by the conveyance vehicle according to the embodiment upon detecting a guide line formed by two-dimensional codes.
FIG. 16 is a diagram illustrating a second operation example performed by the conveyance vehicle according to the embodiment upon detecting the guide line formed by the two-dimensional codes.
FIG. 17 is a diagram illustrating a third operation example performed by the conveyance vehicle according to the embodiment upon detecting the guide line formed by the two-dimensional codes.
FIG. 18 is a flowchart illustrating an example of a control flow performed by the conveyance vehicle according to the embodiment for detecting the guide line formed by the two-dimensional codes.
FIG. 19 is a diagram illustrating another operation example performed by the conveyance vehicle according to the embodiment upon detecting the guide line formed by the two-dimensional codes.
FIG. 20 is a flowchart illustrating another example of the control flow performed by the conveyance vehicle according to the embodiment for detecting the guide line formed by the two-dimensional codes.
FIG. 21 is a flowchart illustrating another example of the control flow performed by the conveyance vehicle according to the embodiment for detecting the guide line formed by the two-dimensional codes.
FIG. 22 is a diagram illustrating a first another example of the conveyance vehicle according to the embodiment for detecting a guide line formed by a magnetic tape.
FIG. 23 is a diagram illustrating a second another example of the conveyance vehicle according to the embodiment for detecting the guide line formed by the magnetic tape.
FIG. 24 is a diagram illustrating a third another example of the conveyance vehicle according to the embodiment for detecting the guide line formed by the magnetic tape.
FIG. 25 is a flowchart illustrating another example of a control flow performed by the conveyance vehicle according to the embodiment for detecting the guide line formed by the magnetic tape.
FIG. 26 is a diagram illustrating an operation performed by the conveyance vehicle according to the embodiment for using guide line detection information under an autonomous traveling mode.

### Description of Embodiments

A detailed description is given below on suitable embodiments of the present disclosure with reference to the accompanying drawings. In this specification and the drawings, redundant explanations of components having substantially identical functional configurations are omitted by applying the same symbols.

### [First Embodiment]

In distribution warehouses and manufacturing plants, conveyed objects, such as carts and pallets, are required to be stopped at a predetermined position and in a predetermined orientation in a predetermined manner, to be coordinated with on-site operations. For example, a conveyed object is required to be conveyed to enable an operator to pick up load on the conveyed object without moving. This is done by stopping a cart at a position of coordination with a belt conveyor, or next to an operation position of the operator. A highly accurate conveyance operation is required for the coordination with the belt conveyor and for the stopping next to the operation position of the operator as described above.

A conventional autonomous traveling-basis system (for autonomous traveling while avoiding an obstacle detected by an obstacle detection sensor utilizing laser light or the like) is difficult to achieve highly accurate conveyance operations, and also involves a problem in that a cumbersome procedure is required for introducing a system for stopping at a predetermined position and in a predetermined orientation in a predetermined manner. A guidance-basis system (for traveling along a guide line laid on a traveling road surface) requires the laying of the guide line on the traveling road surface. The laying operation may interfere with on-site operations. Furthermore, the on-site operations may be required to be changed so as not to damage the laid guide line. When a guide line is laid with a magnetic guide line embedded in the road surface, there is a problem in that the traveling track cannot be easily changed.

In view of the above, the following configuration is desirable. Specifically, an area where a highly accurate conveyance operation is required for stopping in a predetermined manner or for coordination with other equipment such as a belt conveyor is defined as a guided traveling area. In this area, a guide line is laid so that the conveyance vehicle can travel under the guidance-basis system. Other areas are defined as autonomous traveling areas in which the conveyance vehicle travels to a designated designation without any guide line, under the autonomous traveling-basis system based on map data acquired in advance.

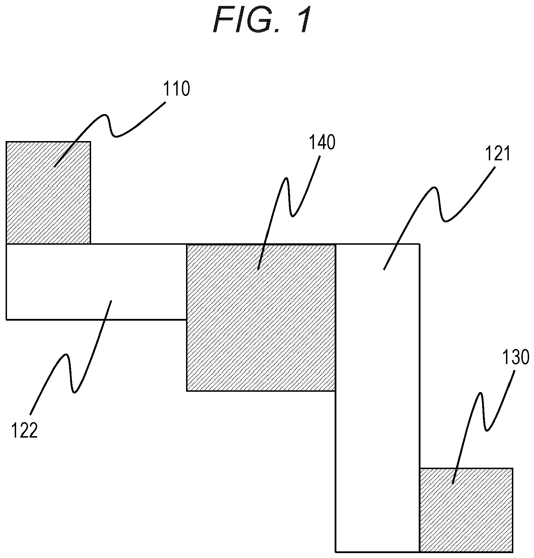

FIG. 1 is a diagram illustrating an operation area of a conveyance system according to an embodiment of the present invention. The operation area of the conveyance vehicle is divided into the guided traveling area and the autonomous traveling area as defined above. Thus, in the operation area of the conveyance system of the illustrated example, improvement in the accuracy of the conveyance control and easy introduction of the conveyance system can both be achieved. In FIG. 1, areas 110, 130, and 140 are defined as guided traveling areas and areas 121 and 122 are defined as autonomous traveling areas.

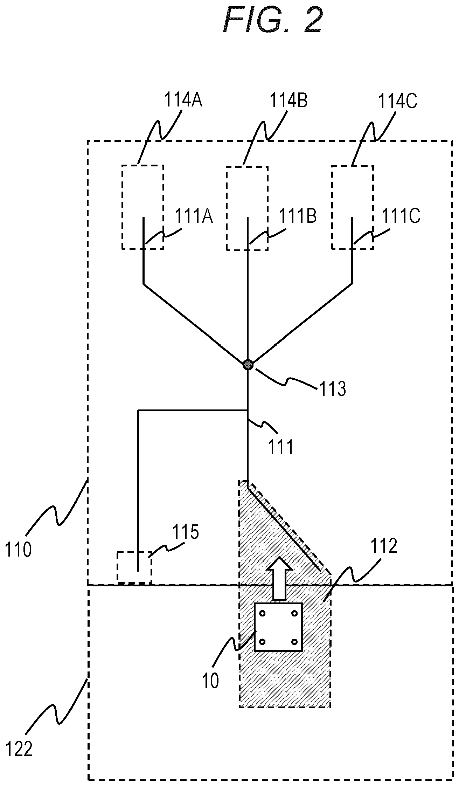

FIG. 2 is a diagram illustrating an example of a configuration of the guided traveling area 110 according to the present embodiment. As illustrated in FIG. 2, in the guided traveling area 110, a guide line 111 is laid, and a guided traveling mode start area 112 where a conveyance vehicle entering the guided traveling area 110 under the autonomous traveling mode detects the guide line and switches to the guided traveling mode, and work areas 114A, 114B, and 114C are defined.

A track formed by the guide line 111 is arranged for connection from the guided traveling mode start area 112 to the work areas 114A, 114B, and 114C. The track includes a branching point 113 and post-branching guide lines 111A, 111B, and 111C respectively leading to the work areas 114A, 114B, and 114C, after the branching. The work areas 114A, 114B, and 114C are, for example, three stop positions for coordination between a belt conveyor and a cart or the liker, or three stop positions for an operator to pick up load on the cart. After the work in the work areas 114A, 114B, and 114C ends, the conveyance vehicle moves along the guide line 111 to an autonomous traveling mode start area 115, switches the traveling mode from the guided traveling mode to the autonomous traveling mode in the autonomous traveling mode start area 115, and exits the guided traveling area 110. An operation after the work in the work areas 114A, 114B, and 114C ends may be different from that in the above-described embodiment in which the switching to the autonomous traveling mode occurs in the autonomous traveling mode start area 115. Specifically, the switching to the autonomous traveling mode may occur in the work areas 114A, 114B, and 114C, followed by the exiting from the guided traveling areas 110. Alternatively, the movement to the guided traveling mode start area 112 may occur along the guide line, and the exiting from the guided traveling area 110 may occur with the switching to the autonomous traveling mode occurring in the guided traveling mode start area 112.

The conveyance vehicle traveling under the autonomous traveling mode in the autonomous traveling area 122 enters the guided traveling area 110 illustrated in an upper part of FIG. 2 from the autonomous traveling area 122 illustrated in a lower part of FIG. 2, upon entering the guided traveling mode start area 112. In other words, the conveyance vehicle travels from the lower side toward the upper side in FIG. 2 in the guided traveling mode start area 112 and detects the guide line 111. Here, a traveling direction set in advance on which the conveyance vehicle travels to detect the guide line 111 after reaching the guided traveling mode start area 112 is set be inclined with respect to a laid direction of the guide line 111 laid in the guided traveling mode start area 112, at a relative angle that is a predetermined angle (20 degrees or more for example) or more. The traveling direction is set with the relative angle being the predetermined angle or more as described above, so that the guide line in the guided traveling mode start area 112 can be more reliably detected, even when the entering position of the conveyance vehicle varies in the right and left direction in FIG. 2.

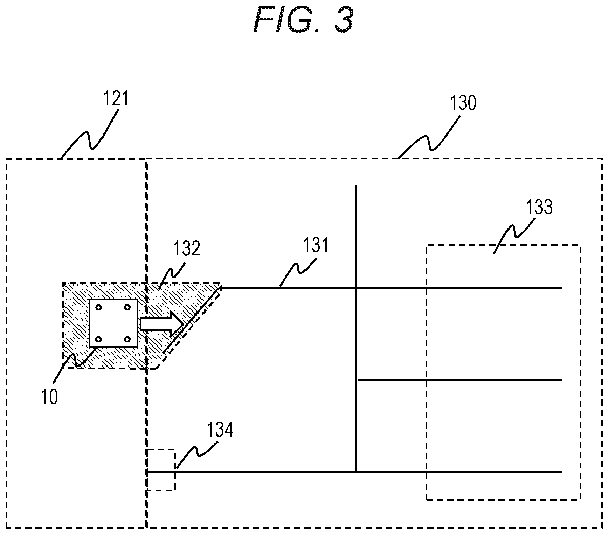

FIG. 3 is a diagram illustrating an example of a configuration of the guided traveling area 130 according to the present embodiment. As illustrated in FIG. 3, in the guided traveling area 130, a guide line 131 is laid, and a guided traveling mode start area 132 where the conveyance vehicle traveling under the autonomous traveling mode detects the guide line 131 and switches to the guided traveling mode, and a work area 133 where work is performed by an operator are defined. The track formed by the guide line 131 is arranged for connection among the guided traveling mode start area 132, the work area 133, and an autonomous traveling mode start area 134 where the guided traveling mode is switched to the autonomous traveling mode, via a plurality of branching points. In the work area 133, a plurality of guide lines are arranged with branching points provided in between, so that a plurality of conveyance vehicles can stop. Like the work areas 114A, 114B, and 114C in the guided traveling area 110, the work area 133 is, for example, a plurality of stop positions for coordination between a belt conveyor and a cart or the liker, or a plurality of stop positions for an operator to pick up load on the cart.

The conveyance vehicle 10 traveling under the autonomous traveling mode in the autonomous traveling area 121 enters the guided traveling area 130 illustrated in a right part of FIG. 3 from the autonomous traveling area 121 illustrated in a left part of FIG. 3, upon entering the guided traveling mode start area 132. In other words, the conveyance vehicle 10 travels from the left side toward the right side in FIG. 3 in the guided traveling mode start area 132 and detects the guide line 131. Here, the guide line 131 is laid in the guided traveling mode start area 132, with a predetermined angle or more (20 degrees or more for example) with respect to the traveling direction set in advance on which the conveyance vehicle travels when detecting the guide line 111 after reaching the guided traveling mode start area 112. The guide line 131 is thus laid with the predetermined angle, so that the guide line in the guided traveling mode start area 132 can be more reliably detected, even when the entering position of the conveyance vehicle varies in the upper and lower direction in FIG. 3.

As for the guide lines 111 and 131 illustrated in FIGs. 2 and 3, various guidance-basis guide lines conventionally used may be applied. Specifically, for example, an electromagnetic induction system under which the magnetic field generated by a weak alternating current flowing through a metal wire installed as a guide line is detected by a pickup coil on the conveyance vehicle, a magnetic induction system under which a magnetic tape laid on the floor surface as a guide line is read by a magnetic sensor on the conveyance vehicle, and an image recognition system under which an image of a two-dimensional code laid on the floor surface as a guide line is captured by a camera on the conveyance vehicle and image processing is performed on the image, can be applied.

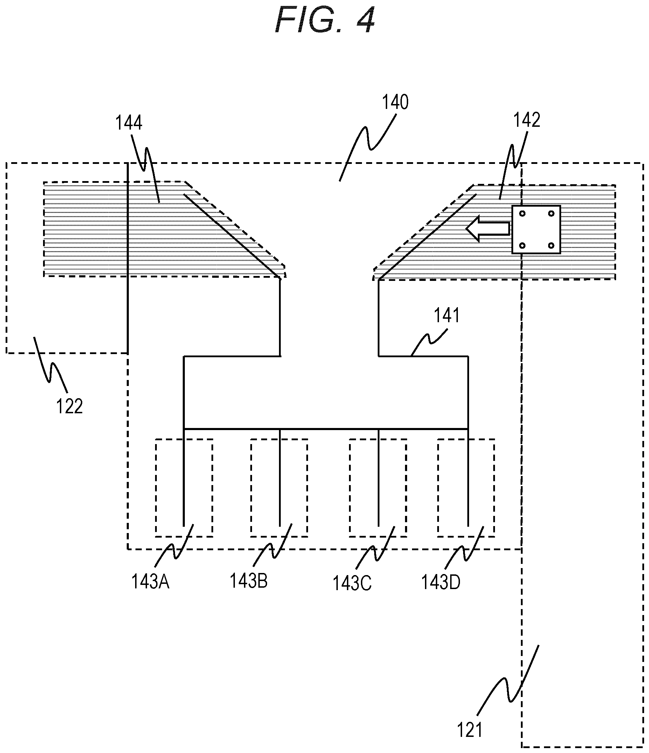

FIG. 4 is a diagram illustrating an example of a configuration of the guided traveling area 140 according to the present embodiment. As illustrated in FIG. 4, in the guided traveling area 140, a guide line 141 is laid, and guided traveling mode start areas 142 and 144 where the conveyance vehicle traveling in the autonomous traveling area 121 or 122 under the autonomous traveling mode detects the guide line 141 and switches to the guided traveling mode, and work areas 143A, 143B, 143C, and 143D where work is performed by an operator, are defined. A track formed by the guide line 141 is arranged for connection between the guided traveling mode start areas 142 and 144 and the work areas 143, via a plurality of branching points. In the work areas 143, a plurality of guide lines are arranged with branching points provided in between, so that a plurality of conveyance vehicles can stop. Like the work areas 114A, 114B, and 114C in the guided traveling area 110, the work areas 143A, 143B, 143C, and 143D are, for example, a plurality of stop positions for coordination between a belt conveyor and a cart or the liker, or a plurality of stop positions for an operator to pick up load on the cart.

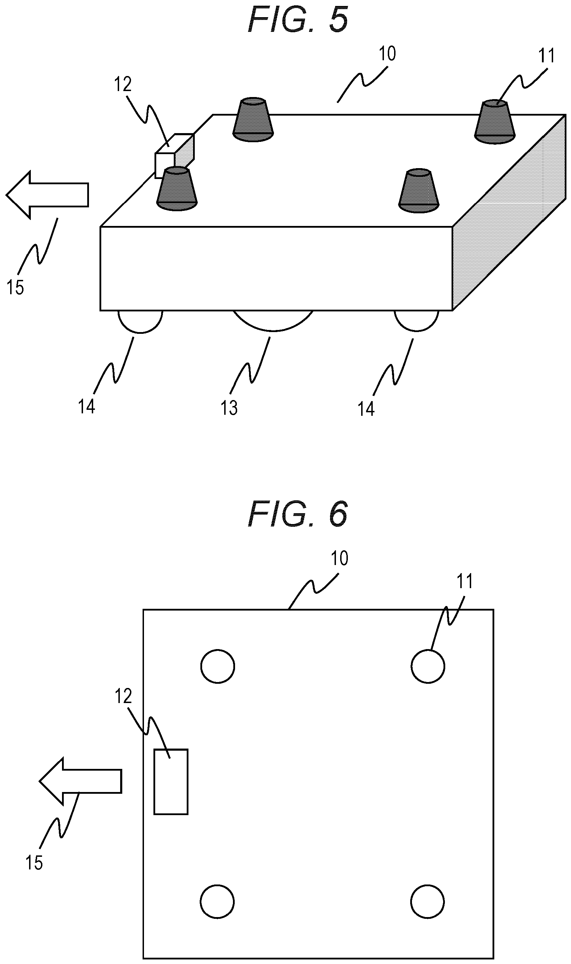

Next, hardware configurations of the conveyance vehicle and a cart towed are described using FIGs. 5 to 9. FIG. 5 is a perspective view illustrating an example of the hardware configuration of the conveyance vehicle according to the present embodiment. An arrow 15 in FIG. 5 indicates the traveling direction of the conveyance vehicle. As illustrated in FIG. 5, the conveyance vehicle includes coupling units 11 for switching between coupled and uncoupled states with a cart, an object position detection unit 12 for detecting an object around the conveyance vehicle, drive wheels 13, and non-drive wheels 14.

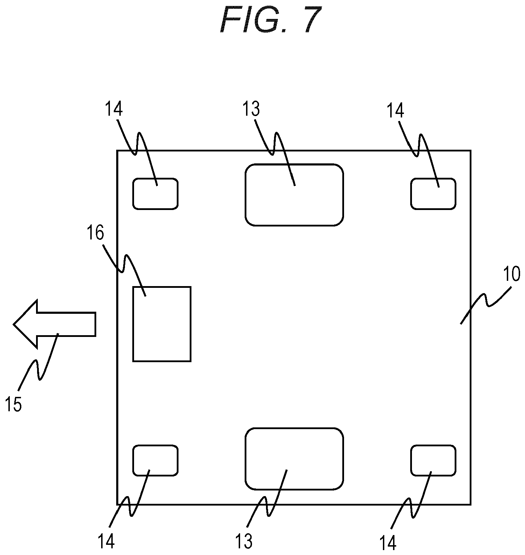

FIG. 6 is a top view illustrating the example of the hardware configuration of the conveyance vehicle according to the embodiment. FIG. 7 is a bottom view illustrating the example of the hardware configuration of the conveyance vehicle according to the embodiment. As illustrated in FIG. 6, the coupling units 11 and the object position detection unit 12 are mounted on the top side of the conveyance vehicle. The coupling units 11 are each formed by an actuator, for example, and are configured so that the actuator can be extended upward to be coupled with a coupling receiver (not illustrated) on the cart when coupling with the cart, and retracted to decouple the coupling unit from the coupling receiver on the cart at the time of decoupling. The coupling units 11 are positioned at four locations surrounding the drive wheels 13 of the conveyance vehicle on a plane, and can be coupled to the cart at four locations.

The object position detection unit 12 is a device for detecting the distance to an object. As one example of the object position detection unit 12 is a laser distance sensor (such as light detection and ranging (LiDAR)) that measures the distance and direction to an object by emitting laser light and measuring the time it takes to hit the object and to be reflected back, a millimeter wave radar that detects the distance to an object based on a millimeter wave transmission signal and a received signal reflected back from the object, a camera-type distance sensor that measures the distance to an object by photographing the object with a camera and analyzing the captured image, or the like may be applied. In the example described in the present embodiment, the object position detection unit 12 is placed in a front part of the top surface part of the conveyance vehicle in the traveling direction, but can alternatively be placed on a front side of the vehicle in the traveling direction. The placement is not limited on the front, and the unit can be placed on a rear side or on both left and right sides relative to the traveling direction.

The object position detection unit 12, which may be configured to detect objects in 360 degrees around the conveyance vehicle, is configured to be capable of detecting an object at least in the traveling direction 15 of the conveyance vehicle.

FIG. 7 is a bottom view illustrating the example of the hardware configuration of the conveyance vehicle according to the present embodiment. On the bottom surface of the conveyance vehicle, the drive wheels 13 are provided at positions on both the left and right sides relative to the traveling direction 15 of the conveyance vehicle, and the non-drive wheels 14 are provided at positions in front of and behind each of the drive wheels 13. The drive wheels 13 are each connected to a rotary shaft of a motor to be driven. The right side drive wheel and the left side drive wheel are controlled individually. By controlling the rotation speed and rotation direction of each drive wheel individually, it is possible to make the conveyance vehicle take a curve or change the orientation by rotating at the current location. The non-drive wheels 14 are formed by wheels that are not driven and rotate passively when the conveyance vehicle is being moved using the drive wheels 13. The non-drive wheels 14 each have, for example, a fork that secures the wheel and an axle. The fork is formed by a rotating caster that is rotatably connected to the bottom member of the conveyance vehicle. Therefore, the wheel rotation direction of the non-drive wheels 14 changes passively in response to the traveling direction and rotation operation of the conveyance vehicle. FIG. 7 illustrates the example of the hardware configuration of the conveyance vehicle with two drive wheels and four non-drive wheels at the four corners. Still, the present invention is not limited to this hardware configuration. A four-wheel configuration with two drive wheels and two non-drive wheels may be employed. Also in this four-wheel configuration, it is possible to adopt a configuration in which the front wheels are steerable.

The conveyance vehicle has a bottom surface provided with a guide line detection unit 16 for detecting a guide line. The guide line detection unit 16 is preferably installed more on the forward side than the drive wheels 13 in the traveling direction of the conveyance vehicle. This makes it easier to follow the guide line when traveling at a position where the guide line is curved. Furthermore, when the conveyance vehicle and a cart towed travel, the information can be received from the guide line quickly so that processing such as stopping can be executed quickly. For the guide line detection unit, a sensor corresponding to the type of guidance-basis system as described above is used. For the sensor of the guide line detection unit, a pickup coil is used when the electromagnetic induction system is employed, a magnetic sensor is used when the magnetic induction system is employed, and a camera is used when the image recognition system is employed.

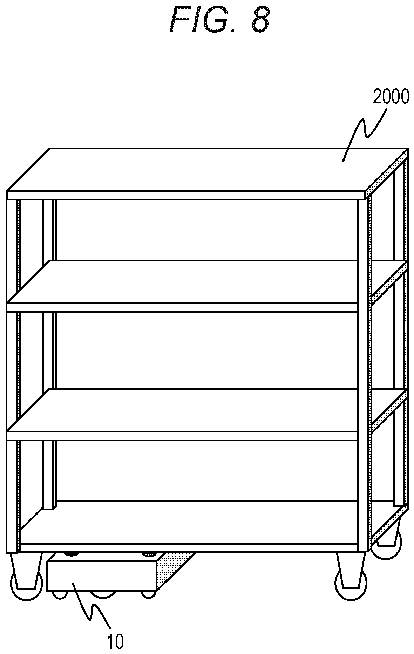

FIG. 8 illustrates an example of the hardware configuration when the conveyance vehicle according to the present embodiment and a cart towed are coupled. Specifically, an example is illustrated where the conveyance vehicle 10 is coupled to the cart while being under the cart, which is the towed target. In this case, mortar-shaped coupling receivers are provided at positions on the bottom surface of the cart, corresponding to the conical-shaped coupling units 11. By extending the coupling units 11 upward, the coupling with the cart can be achieved. By retracting the coupling units 11, decoupling from the cart can be achieved.

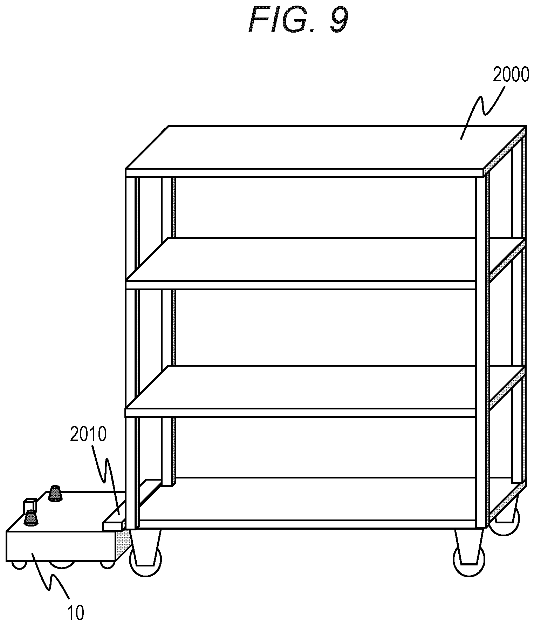

FIG. 9 illustrates another example of the hardware configuration when the conveyance vehicle according to the present embodiment and the cart towed are coupled. The example illustrated in FIG. 9 illustrates the conveyance vehicle coupled to a cart 2000 while being positioned beside the cart. The cart includes a coupling receiver 2010 that is coupled to at least some of the coupling units 11 of the conveyance vehicle. By extending the coupling units 11 upward, the coupling with the cart can be achieved. By retracting the coupling units 11, decoupling from the cart can be achieved. FIGs. 8 and 9 illustrate the example of coupling to and decoupling from the cart by extending and retracting the coupling units 11 each formed by an actuator or the like on the top surface of the conveyance vehicle in the vertical direction. However, coupling between the conveyance vehicle and the cart is not limited to this and may be achieved in any other ways. The conveyed object to be coupled to the conveyance vehicle is not limited to the cart, and can also be, for example, a pallet, a cabinet, or the like without wheels. When conveying a pallet or a cabinet, the conveyance vehicle is coupled to the pallet or cabinet while being arranged under and lifting up the pallet or cabinet.

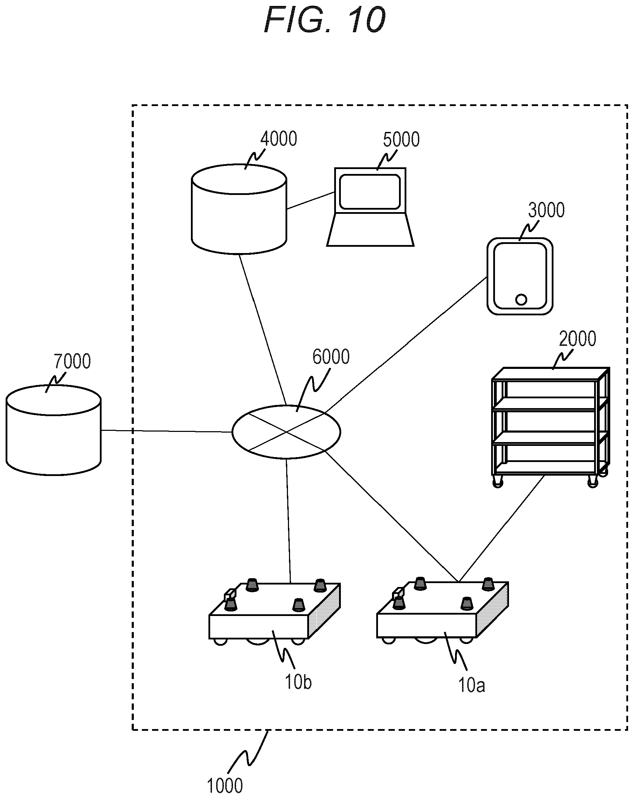

Next, a description is given with reference to a diagram illustrating an overall configuration of the conveyance system according to the present embodiment. FIG. 10 illustrates an example of the overall configuration of the conveyance system. A conveyance system 1000 includes a plurality of conveyance vehicles (10a, 10b), the cart 2000, which is a conveyed object, a maneuvering machine 3000 that can display the state of the conveyance vehicles or input a command to the conveyance vehicles, an operation management device 4000 that manages information necessary for the operation of the conveyance vehicles, an input/output device 5000 that displays information on the operation management device and inputs the information to the operation management device, and a communication network 6000 that communicably connects the plurality of conveyance vehicles (10a, 10b), the maneuvering machine 3000, and the operation management device 4000.

The conveyance system 1000 can also be connected to an external system 7000 via the communication network 6000. When the conveyance system 1000 is introduced to a manufacturing plant to convey parts required for manufacturing from a storage to a production line, the conveyance system 1000 is linked system-to-system with a manufacturing management system as the external system 7000. In this case, if information on the operational progress of the manufacturing operation is acquired from the manufacturing management system, the amount of conveyance by the conveyance vehicles and the conveyance routes can be dynamically adjusted according to the operational progress of the manufacturing operation.

As another example, when the conveyance system 1000 is introduced for logistics run to convey incoming goods from a loading port to a storage when load is brought into a warehouse by truck or the like, and to convey load to be shipped from the storage to a shipping port when load is shipped from the warehouse, the conveyance system 1000 is linked system-to-system with a logistics management system as the external system 7000. In this case, the conveyance amount and the conveyance routes of the conveyance vehicles can be changed by acquiring information on delivery and shipment from the logistics management system.

Since the plurality of conveyance vehicles (10a, 10b) generally operate at the facility where the conveyance system is introduced, each conveyance vehicle is communicably connected to another conveyance vehicle and other components via the communication network 6000. For example, the conveyance vehicle transmits various types of detection information detected by own detection unit and other control information to the maneuvering machine 3000, the operation management device 4000, and other conveyance vehicles. The conveyance vehicle 10 is communicably connected to the cart 2000 by short-range communication means, and is configured to receive, from the cart, information on the coupling status, cart identification information, and the like.

The maneuvering machine 3000 has a function of displaying the status information of the designated conveyance vehicle and the function of inputting a command to the designated conveyance vehicle. For example, the conveyance vehicle status information displayed on the maneuvering machine includes information on the charge amount of the battery mounted in the conveyance vehicle and serving as a power source for the conveyance vehicle, and identification information of the conveyance vehicle and the cart coupled with the conveyance vehicle. The command to be input to the conveyance vehicle includes, for example, command information about the destination of the conveyance vehicle, commands for operations of coupling to and decoupling from the cart, and commands for starting and stopping the traveling of the conveyance vehicle.

The operation management device 4000 has a status information recording unit 4010 that records status information of a plurality of conveyance vehicles operating in a facility area and an operation scenario management unit 4020 that manages operation scenarios for the plurality of conveyance vehicles. The status information of the conveyance vehicles recorded in the status information recording unit 4010 includes, for example, battery charge information for the plurality of conveyance vehicles operating, identification information of the plurality of conveyance vehicles and the carts coupled, position information of the plurality of conveyance vehicles, operation modes of the plurality of conveyance vehicles (guided traveling mode or autonomous traveling mode), other various types of detection information detected by the detection unit 230, and the like. The operation scenarios managed by the operation scenario management unit 4020 include, for example, information on the destination of each of the plurality of conveyance vehicles, the contents a plurality of operations to be performed until reaching the destination, the operation sequence of the plurality of operations, and a switching condition for the plurality of operations.

The input/output device 5000 can display information recorded in the status information recording unit 4010 of the operation management device 4000 and can add new operation scenarios or update the operation scenarios by inputting operation scenarios managed by the operation scenario management unit 4020. The information to be input to the input/output device 5000 includes, for example, information indicating that the destination of a certain conveyance vehicle is a work area A of the guided traveling area 110, the contents of the operation to enter the guided traveling area 110 and reach the work area A, and a switching condition for a plurality of operations.

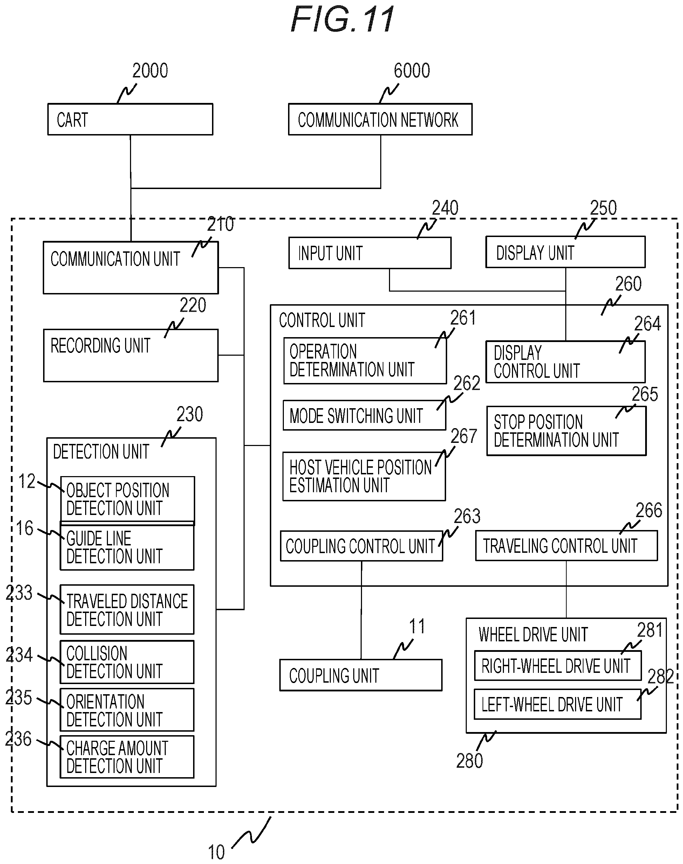

Next, a description is given on functions of the conveyance vehicle using FIG. 11. FIG. 11 is a diagram illustrating a functional configuration of the conveyance vehicle according to the present embodiment. The conveyance vehicle 10 includes a communication unit 210 that communicates with the cart 2000 and the communication network 6000 outside the conveyance vehicle, a recording unit 220, a detection unit 230 including various sensors as described below, the coupling unit 11 for coupling with the cart, a wheel drive unit 280 that drives the wheels, an input unit 240, a display unit 250, and a control unit 260 that controls an operation of the wheel drive unit 280 and the like.

The recording unit 220 has the function of recording information received from the outside by the communication unit 210, detection information detected by the detection unit 230, and control information output from the control unit.

The detection unit 230 includes an object position detection unit 12, a guide line detection unit 232, a traveled distance detection unit 233, a collision detection unit 234, an orientation detection unit 235, and a charge amount detection unit 236. As described above, the object position detection unit 12 is a laser distance sensor (such as light detection and ranging (LiDAR)) that measures the distance and direction to an object by emitting laser light and measuring the time it takes to hit the object and to be reflected back, a millimeter wave radar that detects the distance to an object based on a millimeter wave transmission signal and a received signal reflected back from the object, a camera-type distance sensor that measures the distance to an object by photographing the object with a camera and analyzing the captured image, or the like may be applied.

The guide line detection unit 16 uses sensors according to the type of guidance-basis system as described above. For the sensor of the guide line detection unit, a pickup coil is used when the electromagnetic induction system is employed, a magnetic sensor is used when the magnetic induction system is employed, and a camera is used when the image recognition system is employed. The guide line detection unit detects the guide line when being located directly above the guide line and outputs a detection signal. When an image recognition system is employed under which a camera reads the guide line using a two-dimensional code or a barcode, in addition to the detection signal of the guide line, information on a relative angle between the guide line and the conveyance vehicle can be generated by generating position information based on the information on the code detected and processing the image information of the code.

The traveled distance detection unit 233 detects the number of revolutions of the non-drive wheels 14 or the drive wheels 13 and measures the traveled distance of the conveyance vehicle based on the information on the number of revolutions detected and the diameter (or circumference length) of the non-drive or drive wheels. As an alternative, it is possible to apply a means to detect the traveling speed of the conveyance vehicle using a millimeter wave sensor that irradiates the floor surface with millimeter waves and detects the reflected waves, and estimate the traveled distance by integrating the traveling speed.

The collision detection unit 234 has the function of detecting collision of the conveyance vehicle with an object or person. Specifically, acceleration can be detected by a gyro sensor or the like, and it can be determined that collision has occurred when a sudden change in acceleration is detected. As an alternative, it is possible to install a physical switch together with a bumper in the forward side of the conveyance vehicle in the traveling direction and apply a means to determine that collision has occurred when the physical switch is pressed. When the collision detection unit 234 detects collision, the conveyance vehicle is stopped, at least one of collision occurrence information and the location of the collision is stored in the recording unit, and the operation management device 4000 and the maneuvering machine 3000 are notified of this information. The orientation detection unit 235 detects the orientation of the host vehicle based on a magnetic compass or on information on the number of revolutions of the left and right drive wheels or steering information of the wheels.

The charge amount detection unit 236 detects the charge amount of the battery, which is a power source for the conveyance vehicle. When the charge amount detected by the charge amount detection unit 236 is a predetermined value or less, charging is determined to be required, the detection information indicating the low charge amount is recorded in the recording unit, and the operation management device 4000 and the maneuvering machine 3000 are notified of this information. Furthermore, when the charge amount is detected to be the predetermined value or less, the vehicle may automatically move to a charging spot for charging, in addition to the above process. The aforementioned predetermined value for the charge amount detection unit 236 to determine that charging is required may be a predetermined value based on at least one of the distance to the destination set for the conveyance vehicle and the weight of the conveyed object coupled to the conveyance vehicle.

The input unit 240 is formed by a physical switch, a touch panel, or the like mounted on the conveyance vehicle, which allows the user to directly input operation commands and other types of information into the conveyance vehicle. The display unit 250 is formed by a liquid crystal panel or the like mounted on the conveyance vehicle and displays the status information of the conveyance vehicle (such as various types of detection information detected by the detection unit 230, and currently running operation scenarios).

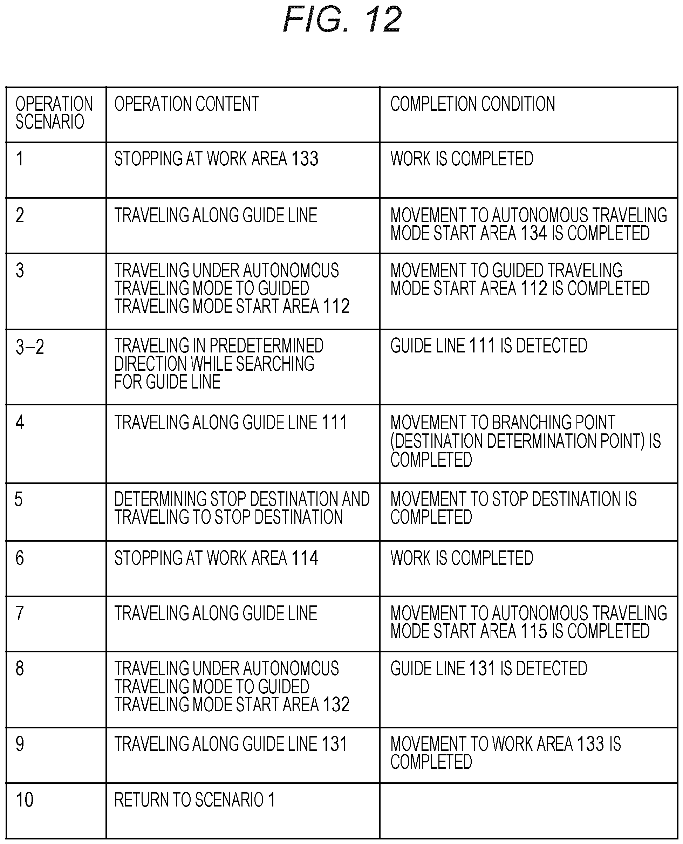

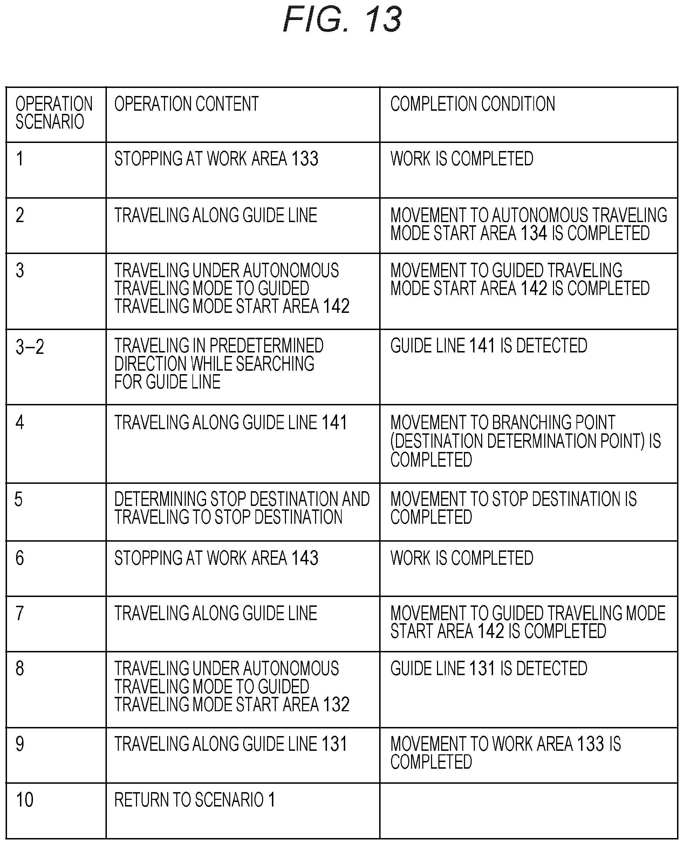

The control unit 260 includes an operation determination unit 261, a mode switching unit 262, a coupling control unit 263, a display control unit 264, a stop position determination unit 265, a traveling control unit 266, and a host vehicle position estimation unit 267. The operation determination unit 261 determines the operation of the conveyance vehicle based on the operation scenario of the host conveyance vehicle acquired from the operation scenario management unit 4020. Examples of the operation scenarios are described below using FIGs. 12 and 13.

The mode switching unit 262 performs mode switching between the guided traveling mode and the autonomous traveling mode for the conveyance vehicle based on a predetermined condition in the operation scenario or the command input using the input unit 240. The coupling control unit 263 controls the operation of the coupling units 11 for coupling with/decoupling from the cart or other conveyed objects based on the predetermined condition in the operation scenario or the command input using the input unit 240. The display control unit 264 controls the aforementioned input unit 240 and display unit 250.

The stop position determination unit 265 executes processing to determine the stop position of the host vehicle based on the position information of the object detected by the object position detection unit 12 when the host machine arrives at the position that is preset as the position where the stop position determination is to be performed. In the present embodiment, a description is given on the stop position determination in a case where the guide line branches into a plurality of lines so that a plurality of destination work areas 114 can be set. In this case, map information including the position information of each of the work areas 114A, 114B, and 114C is stored in the storage unit 220, and it is determined whether the position of the detected object matches any of the respective work areas 114A, 114B, and 114C in the map information. The work area where the object is detected is not determined as the stop destination position. One of the work areas in which no object is detected is determined to be the stop destination position. The object position detection unit 12 can detect the distance and direction to the object from the conveyance vehicle. Since the guide line detection unit acquires information on the position and orientation of the conveyance vehicle, based on this information, it is possible to determine whether the position of the detected object matches the position of any of the work areas 114A, 114B, and 114C in the map information.

The traveling control unit 266 controls the traveling of the conveyance vehicle based on information on determination by at least one of the operation determination unit 261, the mode switching unit 262, and the stop position determination unit 265. Specifically, a right-wheel drive unit 281 and a left-wheel drive unit 282 of the wheel drive unit 280 are controlled individually. The right-wheel drive unit 281 and the left-wheel drive unit 282 are formed of motors, for example. Controlling the rotation speed and rotation direction of each of the drive wheels individually can make the conveyance vehicle take a curve at a desired trajectory radius or rotate to change orientations. The host vehicle position estimation unit 267 estimates the position of the host vehicle over the entire traveling area based on the traveled distance detected by the traveled distance detection unit 233, information on the orientation of the host vehicle detected by the orientation detection unit 235, and the map information of the entire area recorded in the recording unit 220. Alternatively, it is possible to estimate the position of the host vehicle over the entire traveling area based on information on the distance and direction to an object measured by the object position detection unit 12 and the map information of the entire area recorded in the recording unit 220. Alternatively, if the vehicle is traveling on a guide line formed by a two-dimensional code, it is possible to estimate the position of the vehicle over the entire traveling area based on the identification information of the two-dimensional code and the map information as described above.

Next, a description will be given on an example of the operation scenarios in which the conveyance system is introduced to a facility. FIG. 11 illustrates an example of a series of operation scenarios of the conveyance vehicle according to the present embodiment. Specifically, a series of operation scenarios from starting in the work area 133 to returning to the work area 133 is illustrated. The information on the operation scenarios is received from the operation management device 4000 and recorded in the recording unit 220.

A series of operations by the conveyance system includes a plurality of operation scenarios as illustrated in FIGs. 12 and 13. These operation scenarios are input by the user using the input/output device 5000 and stored in a memory device in the operation management device 4000. Each operation scenario has a predefined completion condition for the operation, and if the completion condition is satisfied based on information detected by the detection unit of the conveyance vehicle and the like, the next operation scenario is executed. The plurality of operation scenarios illustrated in FIG. 12 are operation scenarios for executing a work task of reciprocation between the work area 133 and the work area 114. The plurality of operation scenarios illustrated in FIG. 13 are operation scenarios for executing a work task of reciprocation between the work area 133 and the work area 143.

The contents of the plurality of operation scenarios illustrated in FIG. 12 are now described. The operation content of Scenario 1 is stopping at the work area 133, and the completion condition is satisfied when the work performed in that work area is completed. The work performed in the work area includes, for example, the transfer of load on the cart by an operator and the replacement of the cart coupled to the conveyance vehicle. The content of the next operation performed in Scenario 2 is traveling along the guide line 131, and the completion condition is satisfied when the movement to the autonomous traveling mode start area 134 is completed. The completion of the movement to the autonomous traveling mode start area 134 can be detected by means of receiving position information from a proximity communication device installed in the autonomous traveling mode start area 134, or by reading a two-dimensional code including unique ID information and forming the guide line.

The content of the operation in Scenario 3 is traveling under the autonomous traveling mode to the guided traveling mode start area 112. Based on the map information of the entire area (including the guided traveling area and autonomous traveling area) in which the conveyance vehicle travels and the host vehicle position information estimated by the host vehicle position estimation unit that are recorded in the recording unit 220, the vehicle travels without deviating from the autonomous traveling area included in that map information. When the object position detection unit detects an object, the vehicle travels to the guided traveling mode start area 112 along a route circumventing the object. The completion condition for Scenario 3 is satisfied when the host vehicle's position estimated by the host vehicle position estimation unit falls within the guided traveling mode start area 112, that is, when the movement of the vehicle to the guided traveling mode start area 112 is completed. The content of the operation in Scenario 3-2 is traveling in a predetermined traveling direction (from the lower side to the upper side in FIG. 2) while capturing an image of the floor surface using the camera in the guide line detection unit 16 to search for the guide line. The completion condition is satisfied when the guide line detection unit detects the guide line 111.

The content of the operation in Scenario 4 is traveling along the guide line 111, and the completion condition is satisfied when the movement to a branching point, which is a destination determination point, is completed. The specific control method for detecting the guide line and then traveling along the guide line will be described below. The content of the operation in Scenario 5 is determining the stop destination and traveling to the stop destination, and the completion condition is satisfied when the movement to the stop destination is completed. The content of the operation in Scenario 6 is remaining stopped at the work area 114, which is the stop destination, and the completion condition is satisfied when the work by the operator is completed. The completion of the work can be detected when, for example, the operator presses a work completion button, which is also provided on the maneuvering machine 3000 or the input unit 240. The content of the operation in Scenario 7 is traveling along the guide line, and the completion condition is satisfied when the movement to the autonomous traveling mode start area 115 is completed. The content of the operation in Scenario 8 is traveling under the autonomous traveling mode to the guided traveling mode start area 132. The traveling control under the autonomous traveling mode is the same as that in Scenario 3 above. The completion condition is satisfied when the guide line 131 is detected. The content of the operation in Scenario 9 is traveling along the guide line 131, and the completion condition is satisfied when the movement to the work area 133 is completed. The operation returns to Scenario 1 when the operation in Scenario 9 is completed.

The contents of the plurality of operation scenarios illustrated in FIG. 13 for executing a work task of reciprocation between the work area 133 and the work area 143 are now described. Scenarios 1 and 2 are the same as those in FIG. 12, where the work in work area 133 is completed and the vehicle moves to the autonomous traveling mode start area 134. The content of the operation in Scenario 3 is traveling under the autonomous traveling mode to the guided traveling mode start area 142. Based on the map information of the entire area (including the guided traveling area and autonomous traveling area) in which the conveyance vehicle travels and the host vehicle position information estimated by the host vehicle position estimation unit that are recorded in the recording unit 220, the vehicle travels without deviating from the autonomous traveling area included in that map information. When the object position detection unit detects an object, the vehicle travels to the guided traveling mode start area 142 along a route circumventing the object. The completion condition for Scenario 3 is satisfied when the host vehicle's position estimated by the host vehicle position estimation unit falls within the guided traveling mode start area 142, that is, when the movement of the vehicle to the guided traveling mode start area 142 is completed. The content of the operation in Scenario 3-2 is traveling in a predetermined traveling direction (from the right side to the left side in FIG. 4) while capturing an image of the floor surface using the camera in the guide line detection unit 16 to search for the guide line. The completion condition is satisfied when the guide line detection unit detects the guide line 141.

The content of the operation in Scenario 4 is traveling along the guide line 141, and the completion condition is satisfied when the movement to a branching point, which is a destination determination point, is completed. The specific control method for detecting the guide line and then traveling along the guide line will be described below. The content of the operation in Scenario 5 is determining the stop destination and traveling to the determined stop destination from the work areas 143A, 143B, 143C, 143D, and the completion condition is satisfied when the movement to the stop destination is completed. The content of the operation in Scenario 6 is remaining stopped at the work area 143, which is the stop destination, and the completion condition is satisfied when the work by the operator is completed. The completion of the work can be detected when, for example, the operator presses a work completion button, which is also provided on the maneuvering machine 3000 or the input unit 240. The content of the operation in Scenario 7 is traveling along the guide line, and the completion condition is satisfied when the movement to the guided traveling mode start area 142 is completed. The contents of the operations and the completion conditions of Scenarios 8 to 10 are the same as those illustrated in FIG. 12.

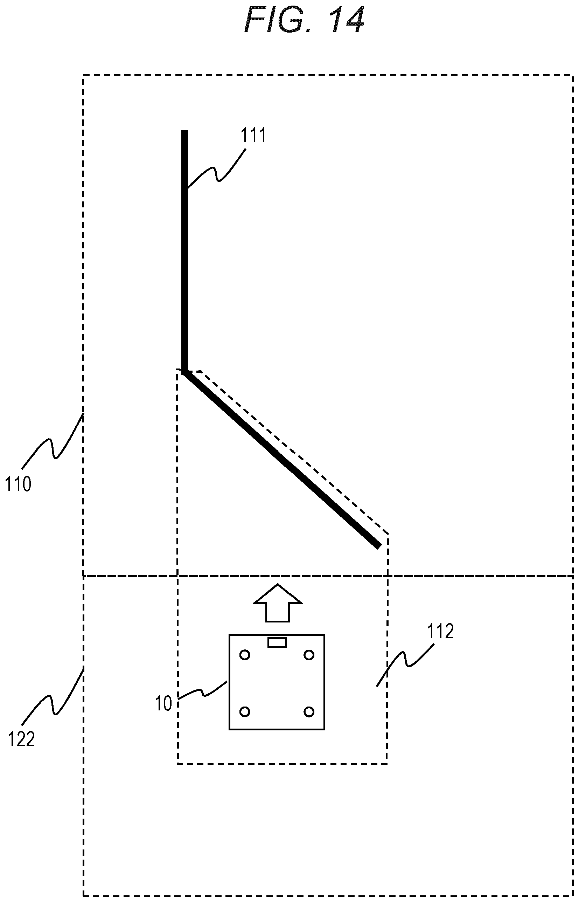

A specific example of control performed from the entering of the conveyance vehicle according to the present embodiment into the traveling mode start area 112 to the traveling along the guide line is described below using FIGs. 14 to 18. FIG. 14 is a diagram illustrating an example of the operation performed by the conveyance vehicle to detect the guide line 111. The guided traveling mode start area 112 is defined across both the guided traveling area 110 and the autonomous traveling area 122, and the travel direction in the guided traveling mode start area 112 is also defined. The range of and the above-mentioned travel direction in the guided traveling mode start area 112 are set in advance by the user using the input/output device 5000 and recorded in the operation management device 4000. The conveyance vehicle receives the information on the range of and the travel direction in the guided traveling mode start area 112 via the communication network 6000 and records the information in the recording unit 220.

The conveyance vehicle travels under the autonomous traveling mode to the guided traveling mode start area 112 based on Scenario 3 in FIG. 12. When the host vehicle position detected by the host vehicle position estimation unit 267 is within the range of the guided traveling mode start area 112 recorded in the recording unit in advance, Scenario 3 is terminated and Scenario 3-2 in FIG. 12 is executed. In Scenario 3-2, the vehicle travels in the travel direction recorded in the recording unit in advance, and the guide line detection unit 16 executes the detection operation. Here, the guide line detection unit may not be operated while the vehicle is traveling autonomously in the autonomous traveling areas 121 and 122, and the guide line detection unit may start the detection operation when the movement of the vehicle to the guided traveling mode start area 112 is completed. Alternatively, the guide line detection unit may execute the detection operation constantly regardless of which of the guided traveling area and the autonomous traveling area the host vehicle is in. The detection result of the guide line detection unit may not be used for the traveling control during the autonomous traveling in the autonomous traveling area. The information on the guide line detected by the guide line detection unit may be used for the traveling control when the movement of the vehicle to the guided traveling mode start area 112 is completed. The guide line detection unit starts operation or the detection result of the guide line detection unit is started to be used for the traveling control when the preset condition of the operation scenario is satisfied by reaching the guided traveling mode start area 112 as described above, for example, detection of an unintended guide line by the guide line detection unit leading to movement to an unintended position can be prevented when passing through a guided traveling area, such as the guided traveling area 140, not set as the destination.

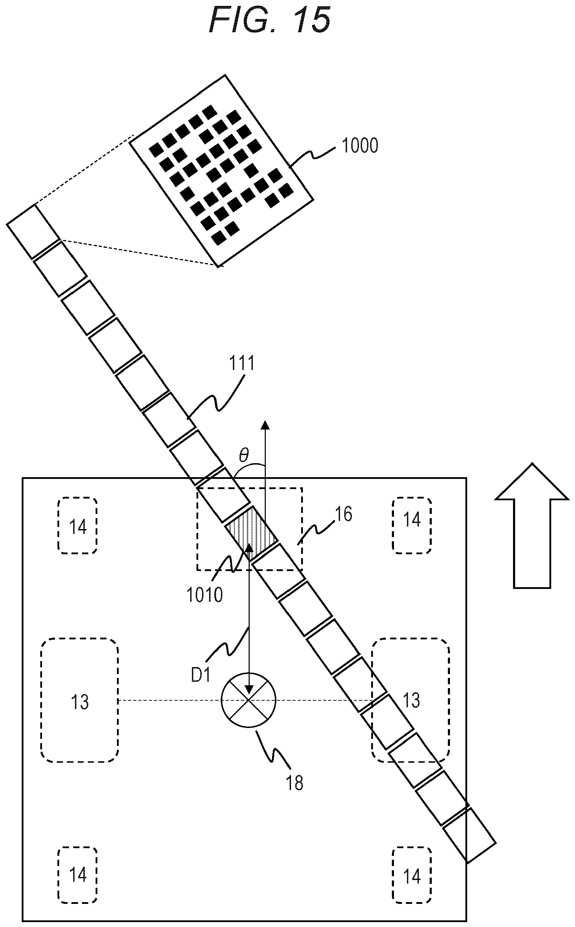

By making the host vehicle travel in the travel direction recorded in advance in the recording unit and making the guide line detection unit 16 execute the detection operation in Scenario 3-2 as described above, transition to Scenario 4 occurs and the traveling along the guide line 111 is performed in response to the detection of the guide line 111. FIGs. 15 to 17 illustrate examples of the operations of the conveyance vehicle from the detection of the guide line 111, formed by a plurality of two-dimensional codes, by the guide line detection unit 16 to the traveling of the conveyance vehicle along the guide line.

FIG. 15 illustrates the positional relationship between the guide line and the conveyance vehicle when the two-dimensional codes forming the guide line are detected by the guide line detection unit 16. The guide line includes a plurality of two-dimensional codes, as represented by the two-dimensional code 1000, having code information printed on a two-dimensional plane, and printed side by side in the laid direction of the guide line. Upon detecting a two-dimensional code, the guide line detection unit 16 acquires the position information of the two-dimensional code based on the code information acquired from the two-dimensional code. Furthermore, based on the image information of the two-dimensional code acquired by the camera, information on the orientation of the two-dimensional code, that is, the relative angle θ between the laid direction of the guide line and the conveyance vehicle, is acquired. As mentioned above, the guide line 111 laid in the guided traveling mode start area 112 is laid at an angle that is a predetermined angle or more (e.g., 20 degrees or more) with respect to the traveling direction of the conveyance vehicle recorded in the recording unit in advance. Thus, when the guide line detection unit 16 detects the two-dimensional code forming the guide line, there is a relative angle θ between the traveling direction of the conveyance vehicle and the laid direction of the guide line. Upon detecting a two-dimensional code 1010 forming a guide line, the guide line detection unit 16 acquires information on the position and the relative angle θ of this two-dimensional code 1010. Then, based on the information on a distance D1 between the guide line detection unit 16 and a rotation center 18 of the conveyance vehicle recorded in the recording unit 220, the host vehicle is moved forward by the distance D1. Here, the rotation center 18 indicates, for example, the midpoint of the straight line connecting the drive wheels, and means the rotation center when the conveyance vehicle is rotated by the plurality of drive wheels.

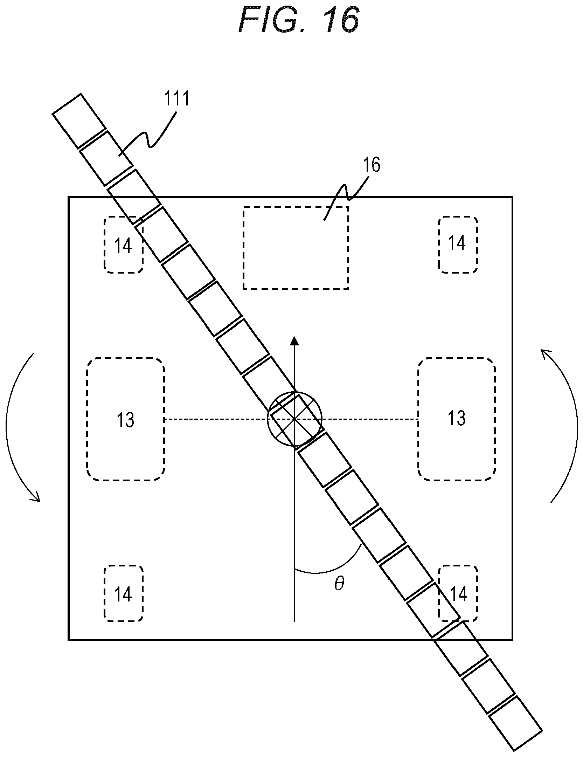

FIG. 16 illustrates a state after the conveyance vehicle has moved forward by the distance D1. In this state, the two-dimensional code 1010 detected by the guide line detection unit 16 substantially matches the rotation center of the conveyance vehicle. In this state, the conveyance vehicle rotates the vehicle body in the rotation direction in which the above relative angle θ detected by the guide line detection unit approaches zero based on the information on the relative angle θ. Specifically, the vehicle body is rotated counterclockwise. Then, the rotation operation continues until the guide line detection unit detects the guide line again.

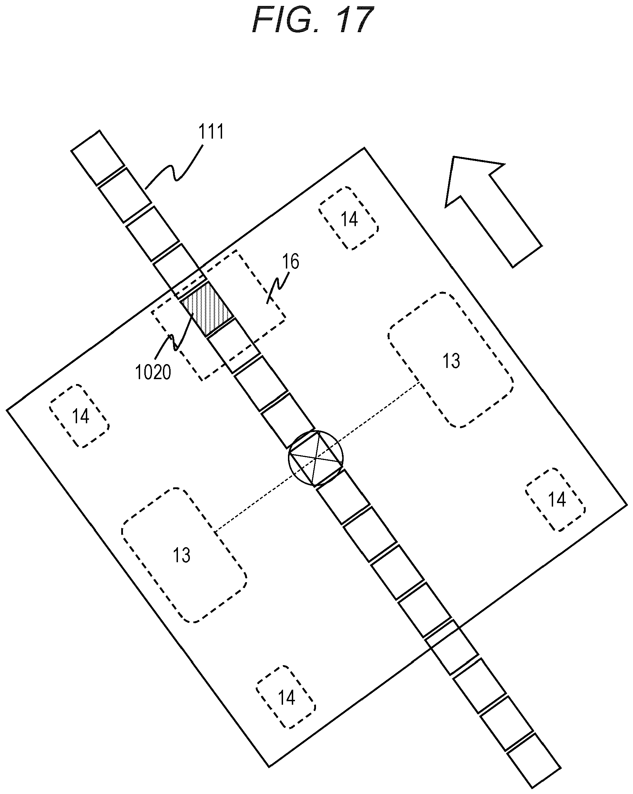

FIG. 17 illustrates a state where the conveyance vehicle detects the guide line while performing the rotation operation. In this state, the rotation center is in a position that substantially matches the position of the two-dimensional code 1010, and the two-dimensional code is within the detection range of the guide line detection unit. Thus, the conveyance vehicle is oriented in a direction substantially matching the laid direction of the guide line. Upon detecting the guide line while performing the rotation operation, the conveyance vehicle stops the rotation operation, and travels along the guide line detected.

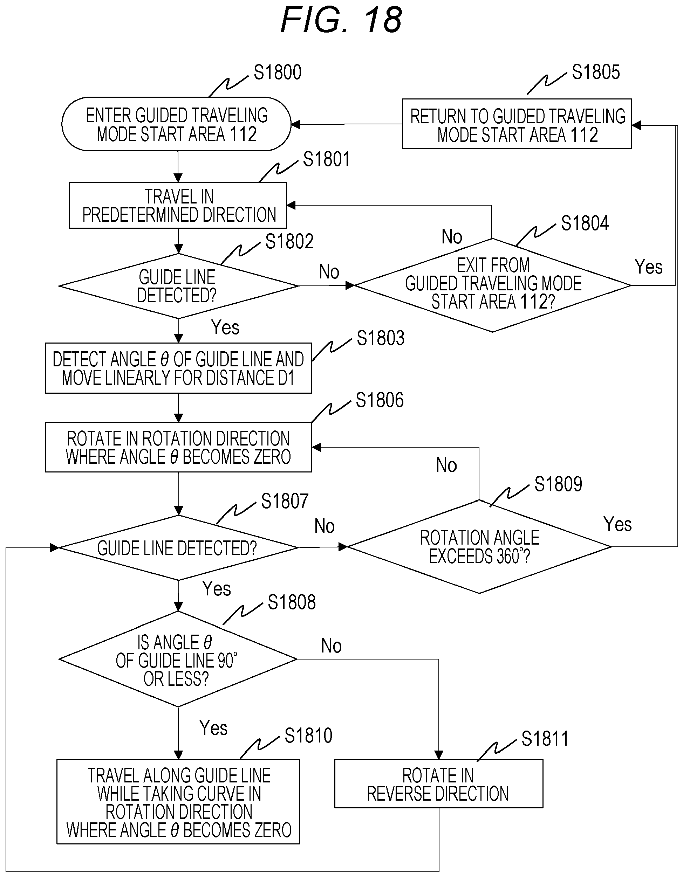

FIG. 18 illustrates an example of the control flow from entering of the conveyance vehicle into the guided traveling mode start area 112 to the traveling along the guide line 111, as illustrated in FIGs. 14 to 17. In step 1800 (S1800), the conveyance vehicle travels under the autonomous traveling mode and the host vehicle position estimation unit 267 detects the entering into the guided traveling mode start area 112. Next, in step 1801 (S1801), based on the predetermined direction information set in advance and recorded in the recording unit 220 using the input/output device 5000 or the like, the conveyance vehicle travels in the predetermined direction. In this case, the traveling is performed while the guide line detection unit 16 performs the guide line detection operation. The guide line detection operation by the guide line detection unit 16 may be continuously performed in the autonomous traveling area before the entering into the guided traveling mode start area 112, or the detection operation may be triggered by the entering into the guided traveling mode start area 112.

Next, in step 1802 (S1802), the guide line detection unit 16 determines whether a guide line is detected. When the guide line is detected, the processing proceeds to step 1803 (S1803). In step 1804 (S1804), based on the estimation result from the host vehicle position estimation unit, whether exiting from the guided traveling mode start area 112 has occurred is determined. When it is determined that the exiting form the guided traveling mode start area 112 has not occurred yet, the processing returns to step 1801 (S1801), and the processing of making the conveyance vehicle travel in the predetermined direction continues. When it is determined in step 1804 (S1804) that the exiting from the guided traveling mode start area 112 has occurred, step 1805 (S1805) is executed. In step 1805 (S1805), the processing of returning to the guided traveling mode start area 112 is executed based on the estimation result from the host vehicle position estimation unit, and the processing proceeds to step 1800 (S1800). The processing returns to step 1800 (S1800) to be repeated, whereby the guide line detection operation is performed again.

In step 1803 (S1803), the angle θ, which is the relative angle between the guide line detected by the guide line detection unit 16 and the host vehicle, is detected, and the vehicle moves linearly forward by the predetermined distance D1 from the guide line detected position. Next, in step 1806 (S1806), the host vehicle rotates in the rotation direction in which the angle θ becomes zero. Here, the rotation direction in which the angle θ becomes zero may be determined based on the information detected by the guide line detection unit 16, or the rotation direction may be set in advance using the input/output device 5000.

Next, in step 1807 (S1807), it is determined whether the guide line is detected by the guide line detection unit 16. When it is determined that the guide line is detected, the processing proceeds to step 1808 (S1808). On the other hand, when it is determined that the guide line is not detected, the processing proceeds to step 1809 (S1809). In step 1809 (S1809), based on the detection result from the orientation detection unit 235, it is determined whether the rotation angle of the rotation operation started in step 1806 (S1806) has exceeded 360 degrees. When it is determined that the angle has not exceeded 360 degrees, the processing returns to step 1806 (S1806) to continue the rotation operation. On the other hand, when it is determined that the angle has exceeded 360 degrees, the processing returns to step 1805 (S1805) and the guide line detection operation is performed again. Here, in step 1805 (S1805), in conjunction with or instead of returning to the guided traveling mode start area 112 and performing the guide line detection operation again from the beginning, a notification indicating the failure to detect the guide line may be issued to the display unit 250 of the conveyance vehicle, and the maneuvering machine 3000, the input/output device 5000, and the external system 7000 outside the conveyance vehicle.

Next, in step 1808 (S1808), it is determined whether the angle θ of the guide line detected in step 1807 (S1807) is 90 degrees or less. When the angle θ is determined to be 90 degrees or less, the processing proceeds to step 1810 (S1810). On the other hand, when the angle θ is not determined to be 90 degrees or less, the processing proceeds to step 1811 (S1811). In step 1810 (S1810), the traveling is performed along the guide line detected by the guide line detection unit 16. In step 1811 (S1811), the conveyance vehicle is expected to be in oriented opposite to the laid line, and thus the host vehicle is rotated toward the opposite direction and the processing returns to step 1807 (S1807).

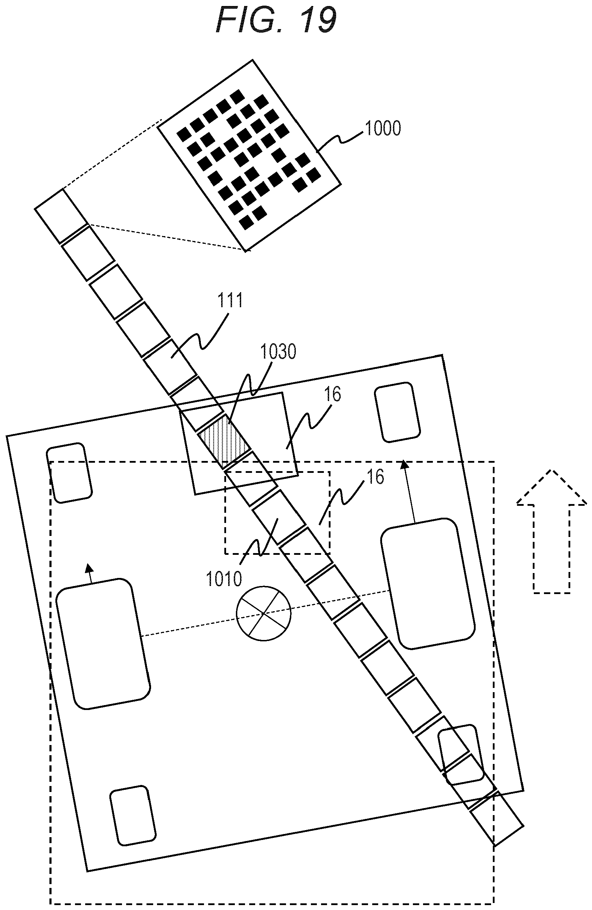

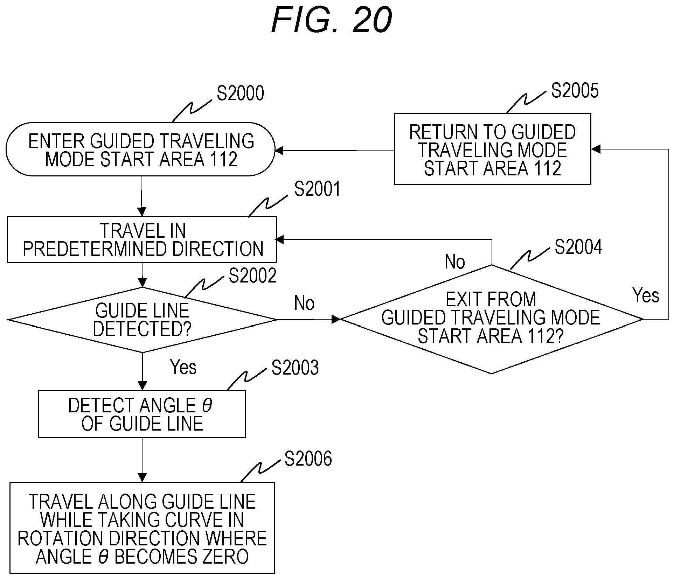

FIGs. 15 to 18 illustrate an example of the operations to the traveling of the conveyance vehicle along the guide line. The following description is given with reference to FIGs. 19 and 20, on another example of operations from detection of the guide line 111 formed by a plurality of two-dimensional codes by the guide line detection unit 16 to the traveling of the conveyance vehicle along the guide line.

FIG. 19 illustrates the positional relationship between the guide line and the conveyance vehicle when the conveyance vehicle travels along the laid direction of the guide line, after the guide line detection unit 16 detects a two-dimensional code forming the guide line while the vehicle is traveling in a predetermined direction. When the guide line detection unit 16 detects the two-dimensional code 1010 while the conveyance vehicle is traveling in the upward direction in FIG. 19 (direction indicated by an arrow in the figure) as the predetermined direction, the conveyance vehicle is at a position indicated by a dotted line in the figure, and the relative angle θ between the guide line and the host vehicle is detected. Thereafter, the conveyance vehicle travels under control to move to a position indicated by a solid line in the figure, to make the guide line detection unit 16 continuously detect the guide line (to maintain the state where the guide line is included in the detection range of the guide line detection unit 16), and a two-dimensional code 1030 is detected. Thus, the traveling of the conveyance vehicle is controlled in such a manner that the conveyance vehicle travels with the rotation speed of the right side drive wheels being higher than that of the left side drive wheels, and thus makes a curve toward the left side in FIG. 19 so that the relative angle θ approaches zero.

FIG. 20 is a flowchart illustrating the control flow of the traveling control for the conveyance vehicle illustrated in FIG. 19. In step 2000 (S2000), the conveyance vehicle travels under the autonomous traveling mode and the host vehicle position estimation unit 267 detects the entering into the guided traveling mode start area 112. Next, in step 2001 (S2001), based on the predetermined direction information set in advance and recorded in the recording unit 220 using the input/output device 5000 or the like, the conveyance vehicle travels in the predetermined direction. In this case, the traveling is performed while the guide line detection unit 16 performs the guide line detection operation. The guide line detection operation by the guide line detection unit 16 may be continuously performed in the autonomous traveling area before the entrance into the guided traveling mode start area 112, or the detection operation may be triggered by the entering into the guided traveling mode start area 112.

Next, in step 2002 (S2002), the guide line detection unit 16 determines whether a guide line is detected. When the guide line is detected, the processing proceeds to step 2003 (S2003). On the other hand, when the guide line is not detected, the processing proceeds to step 2004 (S2004). In step 2004 (S2004), based on the estimation result from the host vehicle position estimation unit, whether exiting from the guided traveling mode start area 112 has occurred is determined. When it is determined that the exiting form the guided traveling mode start area 112 has not occurred yet, the processing returns to step 2001 (S2001), and the processing of making the conveyance vehicle travel in the predetermined direction continues. When it is determined in step 2004 (S2004) that the exiting from the guided traveling mode start area 112 has occurred, step 2005 (S2005) is performed. In step 2005 (S2005), the processing of returning to the guided traveling mode start area 112 is executed based on the estimation result from the host vehicle position estimation unit, and the processing proceeds to step 2000 (S2000). The processing returns to step 2000 (S2000) to be repeated, whereby the guide line detection operation is performed again.

In step 2003 (S2003), the angle θ is detected, which is the relative angle between the guide line detected by the guide line detection unit 16 and the host vehicle. Next, in step 2006 (S2006), the traveling of the conveyance vehicle is controlled so that the guide line detection unit 16 continuously detects the guide line (that is, a state where the laid position of the guide line is included in the detection range of the guide line detection unit 16 is maintained) while the vehicle takes a curve in the rotation direction in which the angle θ becomes zero. With the conveyance vehicle thus traveling along the guide line to take a curve, the traveling of the conveyance vehicle is controlled to gradually reduce the angle θ.

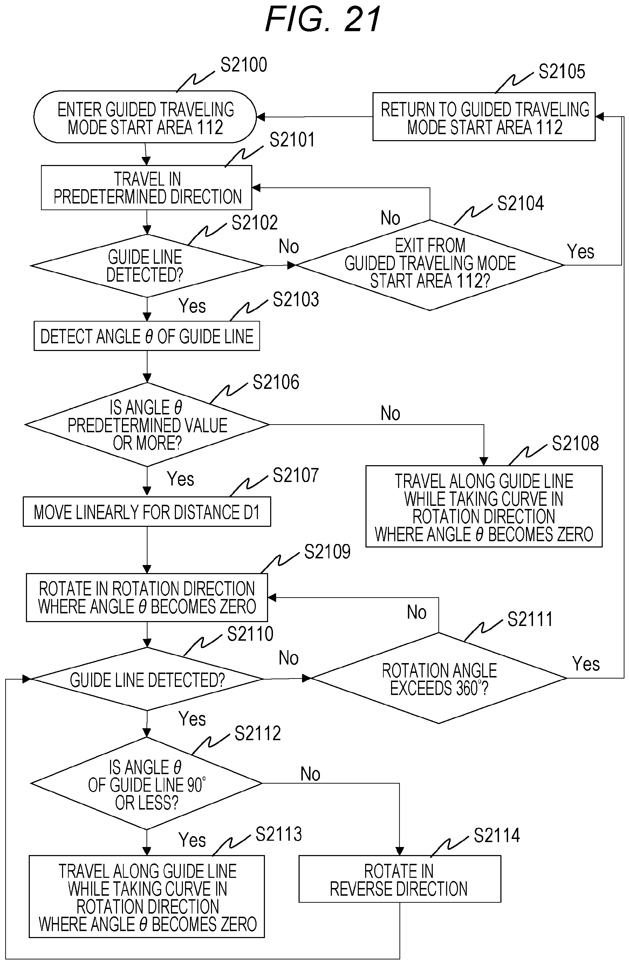

As described above, the control flowchart illustrated in FIG. 18 illustrates a method of reducing the relative angle between the traveling direction of the conveyance vehicle and the laid direction of the guide line after the conveyance vehicle has detected the guide line, and making the conveyance vehicle travel along the guide line. Specifically, in the method, the conveyance vehicle moves linearly by the distance D1 after detecting the guide line, and performs the rotation operation at the resultant position to make the traveling direction of the conveyance vehicle match the laid direction of the guide line. The control flowchart in FIG. 20 illustrates another method in which the conveyance vehicle that has detected the guide line travels while taking a curve to make the guide line detection unit 16 continuously detect the guide line, to make the traveling direction of the conveyance vehicle gradually match the laid direction of the guide line. Now, with reference to a control flowchart in FIG. 21, a description is given on an example of control in which a method for making the conveyance vehicle travel along the guide line is selected according to the relative angle between the guide line and the host vehicle at the point when the conveyance vehicle detects the guide line.

Since each control step from step 2100 (S2100) to step 2105 (S2105) illustrated in FIG. 21 is similar to the control flow illustrated in FIG. 20, the description thereof is omitted. Thus, the description starts from the control step at step 2106 (S2106). In step 2106 (S2106), it is determined whether the angle θ detected in step 2103 (S2103) is a predetermined value or more. When the angle is determined to be the predetermined value or more, the processing proceeds to step 2107 (S2107). When the angle is determined not to be the predetermined value or more, the processing proceeds to step 2108 (S2108). In step 2108 (S2108), the conveyance vehicle travels along the guide line while taking a curve in the rotation direction in which the angle θ becomes zero. The content of the processing in this step is the same as that in step 2006 (S2006) in FIG. 20.

In step 2107 (S2107), the angle θ of the guide line is detected and the host vehicle moves linearly by the distance D1. Then, the processing proceeds to step 2109 (S2109). The content of the processing in each step from step 2109 (S2109) to step 2114 (S2114) is the same as that in step 1806 (S1806) to step 1811 (S1811) illustrated in FIG. 18.

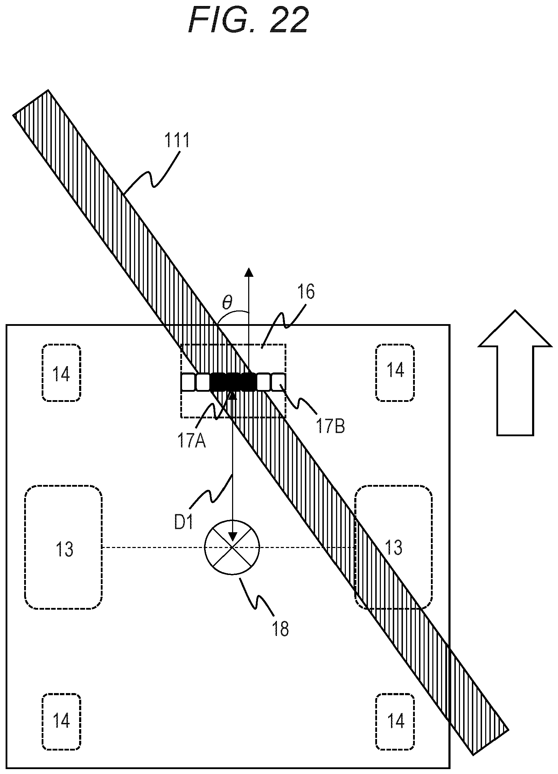

In the example described in the above embodiment, the information on the relative angle θ between the conveyance vehicle and the two-dimensional codes or one dimensional barcodes used as the guide line is detected to be used for the control. Alternatively, a magnetic tape or the like may be used as the guide line in the present invention. An embodiment where a magnetic tape is used as the guide line is described below with reference to FIGs. 22 to 25.

FIG. 22 illustrates the positional relationship between the guide line and the conveyance vehicle when the guide line detection unit 16 detects a magnetic tape forming the guide line. The guide line detection unit 16 illustrated in FIG. 22 includes a plurality of magnetic sensors 17 for detecting the magnetic tape. The magnetic sensors 17 are arranged in the lateral direction with respect to the traveling direction of the conveyance vehicle. The plurality of magnetic sensors 17 provided to the guide line detection unit 16 each output a detection signal indicating whether the magnetic tape is detected. In the case illustrated in FIG. 22, three magnetic sensors 17A located at the center of the guide line detection unit 16 detect the magnetic tape, whereas two magnetic sensors 17B on both sides of the guide line detection unit 16 do not detect the magnetic tape.

As mentioned above, the guide line 111 laid in the guided traveling mode start area 112 is laid at an angle that is a predetermined angle or more (e.g., 20 degrees or more) with respect to the traveling direction of the conveyance vehicle recorded in the recording unit in advance. Thus, when the guide line detection unit 16 detects the guide line, there is a relative angle θ between the traveling direction of the conveyance vehicle and the laid direction of the guide line. Then, based on the information on a distance D1 between the guide line detection unit 16 and a rotation center 18 of the conveyance vehicle recorded in the recording unit 220, the host vehicle is moved forward by the distance D1. Here, the rotation center 18 indicates, for example, the midpoint of the straight line connecting the drive wheels, and means the rotation center when the conveyance vehicle is rotated by the plurality of drive wheels.

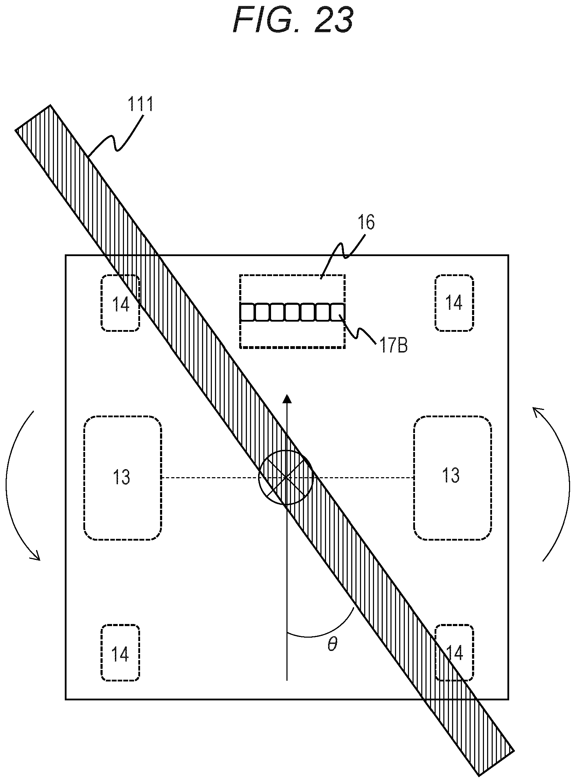

FIG. 23 illustrates a state after the conveyance vehicle has moved forward by the distance D1. In this state, the guide line detected by the guide line detection unit 16 substantially matches the rotation center of the conveyance vehicle. In this state, the conveyance vehicle rotates itself in a predetermined direction based on the predetermined rotation direction information recorded in the recording unit (FIG. 23 illustrates an example of rotating the vehicle body counterclockwise). Then, the rotation operation continues until the guide line detection unit 16 detects the guide line again.

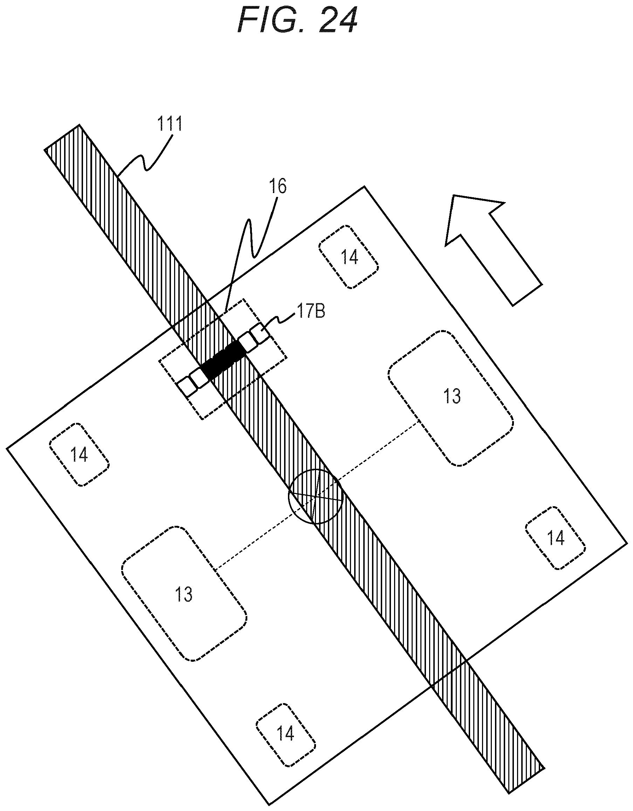

FIG. 24 illustrates a state where the conveyance vehicle detects the guide line while performing the rotation operation. In this state, the rotation center is substantially positioned on the guide line, and the guide line is located within the detection range of the guide line detection unit. Thus, the conveyance vehicle is oriented in a direction substantially matching the laid direction of the guide line. Upon detecting the guide line with the guide line detection unit while performing the rotation operation, the conveyance vehicle stops the rotation operation, and travels along the guide line detected. In other words, the conveyance vehicle travels with the traveling direction adjusted to enable the magnetic tape to be detected by the magnetic sensors at the center of the guide line detection unit.

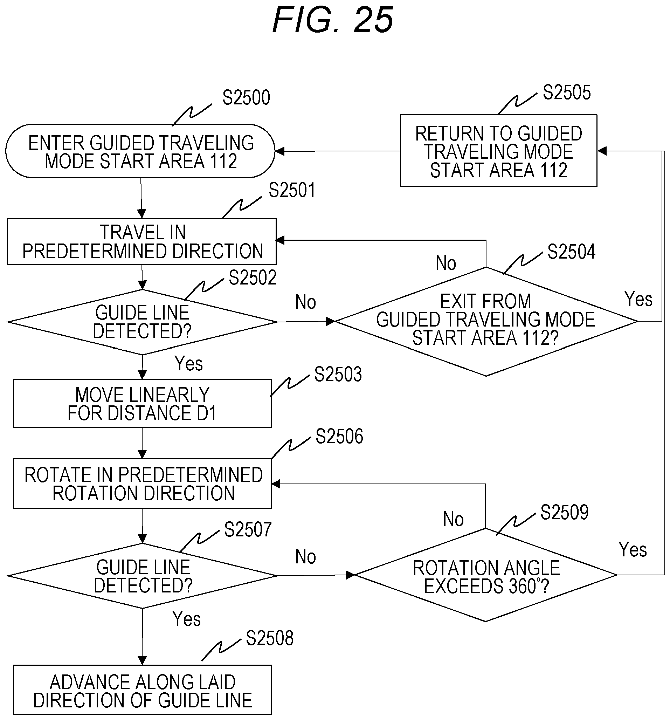

FIG. 25 illustrates an example of the control flow from entering of the conveyance vehicle into the guided traveling mode start area 112 to the traveling along the guide line 111, as illustrated in FIGs. 22 to 24. The contents of control performed in Step 2500 (S2500), Step 2501 (S2501), Step 2502 (S2502), Step 2504 (S2504), and Step 2505 (S2505) are similar to those in Step 1800 (S1800), Step 1801 (S1801), Step 1802 (S1802), Step 1804 (S1804), and Step 1805 (S1805) in FIG. 18. Thus, the description there of is omitted, and the description is given on Step 2503 (S2503) and after.

In step 2503 (S2503), the conveyance vehicle moves linearly forward for the predetermined distance D1 from the position where the guide line is detected, based on the information on the distance D1 between the guide line detection unit 16 and the rotation center 18 of the conveyance vehicle recorded in the recording unit 220. Next, in step 2506 (S2506), based on the rotation direction that has been set in advance using the input/output device 5000 and recorded in the recording unit 220, the operation to rotate in that rotation direction is performed.

Next, in step 2507 (S2507), it is determined whether the guide line detection unit 16 detects the guide line. Specifically, the guide line is determined to be detected when the plurality of magnetic sensors 17 detect the magnetic tape. When it is determined that the guide line is detected, the processing proceeds to step 2508 (S2508). On the other hand, when it is determined that the guide line is not detected, the processing proceeds to step 2509 (S2509). In step 2509 (S2509), based on the detection result from the orientation detection unit 235, it is determined whether the rotation angle of the rotation operation started in step 2506 (S2506) has exceeded 360 degrees. When it is determined that the angle has not exceeded 360 degrees, the processing returns to step 2506 (S2506) to continue the rotation operation. On the other hand, when it is determined that the angle has exceeded 360 degrees, the processing returns to step 2505 (S2505) and the guide line detection operation is performed again. Here, in step 2505 (S2505), in conjunction with or instead of returning to the guided traveling mode start area 112 and performing the guide line detection operation again from the beginning, a notification indicating the failure to detect the guide line may be issued to the display unit 250 of the conveyance vehicle, and the maneuvering machine 3000, the input/output device 5000, and the external system 7000 outside the conveyance vehicle.

Next, in S2508, the rotation operation is stopped, and the conveyance vehicle travels along the guide line detected by the guide line detection unit 16. In other words, the conveyance vehicle travels with the traveling direction adjusted to enable the magnetic tape to be detected by the magnetic sensors 17 at the center of the guide line detection unit 16.

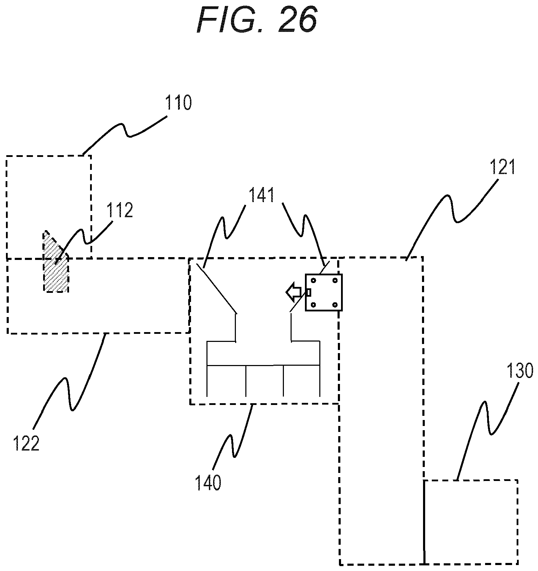

A traveling control method for a movement to the guided traveling mode start area 112 through the traveling under the autonomous traveling mode in Scenario 3 in FIG. 12 will be described below. FIG. 26 illustrates an example of operation for the traveling control under the autonomous traveling mode from the guided traveling area 130 to the guided traveling mode start area 112. With this traveling control, while traveling from the guided traveling area 130 to the guided traveling mode start area 112, the conveyance vehicle passes over the guide line 141 laid in the guided traveling area 140 and travels under the autonomous traveling mode to the guided traveling mode start area 112.

Under the autonomous traveling mode, based on the map information of the entire area (including the guided traveling area and autonomous traveling area) in which the conveyance vehicle travels and the vehicle position information estimated by the host vehicle position estimation unit 267 that are recorded in the recording unit 220, the vehicle travels without deviating from the autonomous traveling area included in that map information. When the object position detection unit 12 detects an object, the vehicle travels to the guided traveling mode start area 112 along a route circumventing the object. The completion condition for Scenario 3 is satisfied when the host vehicle's position estimated by the host vehicle position estimation unit falls within the guided traveling mode start area 112, that is, when the movement of the vehicle to the guided traveling mode start area 112 is completed.

Here, when the guide line is formed by a code such as a two-dimensional code or bar code, it is possible to improve the accuracy of traveling under the autonomous traveling mode by using the acquired code information, with the guide line detection unit 16 performing the guide line detection operation in the autonomous traveling mode.

As described above, the host vehicle position estimation unit 267 estimates the position of the host vehicle over the entire traveling area based on the traveled distance detected by the traveled distance detection unit 233, information on the orientation of the host vehicle detected by the orientation detection unit 235, and the map information of the entire area recorded in the recording unit 220. Alternatively, the position of the host vehicle is estimated over the entire traveling area based on information on the distance and direction to an object measured by the object position detection unit 12 and the map information of the entire area recorded in the recording unit 220. However, the traveled distance detection unit 233, the orientation detection unit 235, and the object position detection unit 12 each involve a detection error, which will need to be resolved for improving the accuracy of the traveling under the autonomous traveling mode.

The host vehicle position can be detected based on the code information acquired through the guide line detection operation by the guide line detection unit 16 and the map information including the position of arrangement of the codes recorded in the recording unit. The host vehicle position detected based on the code information of the guide line is less susceptible to the detection error described above, and thus enables the host vehicle position to be detected more accurately. Therefore, when the guide line detection unit 16 acquires the code information from the guide line by performing the guide line detection operation during the traveling under the autonomous traveling mode, the host vehicle position detected based on the code information is used for the traveling control. Thus, the host vehicle position information detected based on the code information is used for traveling control, instead of the estimated information on the host vehicle position based on the detection information from the traveled distance detection unit 233, the orientation detection unit 235, and the object position detection unit 12.

By using the information on the host vehicle position detected based on the code information acquired by the guide line detection unit 16 for traveling control under the autonomous traveling mode as described above, it is possible to improve the accuracy of traveling control. To further improve the accuracy of traveling control under the autonomous traveling mode, guide lines formed by codes such as two-dimensional codes or bar codes can be laid at a predetermined interval in the autonomous traveling areas 121 and 122, where the autonomous traveling mode is implemented.

Preferred embodiments of the present disclosure have been described with reference to the accompanying drawings, but the technical scope of the present disclosure is not limited to such examples. It is apparent to those skilled in the technical field of the present disclosure that various examples of changes or modifications can be conceived of within the scope of the technical idea described in the appended claims, and these also naturally fall within the technical scope of the present disclosure.

The devices described herein may be implemented as stand-alone devices or as a plurality of devices some or the entirety of which is connected by a network (for example, a cloud server). For example, the control unit 260 and the recording unit 220 of the conveyance vehicle may be implemented by different servers connected to each other by a network. In the conveyance system described herein, an example is described where the maneuvering machine 3000, the operation management device 4000, and the input/output device 5000 are each formed by independent hardware and are connected to each other by a network. Alternatively, some or the entirety of the functions of the maneuvering machine 3000, the operation management device 4000, and the input/output device 5000 may be provided in the conveyance vehicle 10.

The series of processes implemented by the devices described herein may be achieved using software, hardware, and a combination of software and hardware. A computer program can be created and implemented on a computer or other devices to achieve the functions of the control unit 260 in the present embodiment. A computer-readable recording medium storing such a computer program can also be provided. Examples of the recording medium include a magnetic disk, an optical disc, a magneto-optical disk, and a flash memory. The above-described computer program may be distributed, for example, over a network, without using a recording medium.

The processes described herein using a flowchart do not necessarily have to be executed in the order illustrated. Some of the processing steps may be performed in parallel. Additional processing steps may be employed, and some processing steps may be omitted.

The advantageous effects described herein are illustrative or exemplary only and not limiting. In other words, the technology of the present disclosure may produce other effects that are obvious to those skilled in the art from the description herein, either together with or in place of the above-described advantageous effects.

The following configurations are also within the technical scope of the present disclosure.

(Note 1) A conveyance system including: a guide line detection unit configured to detect a guide line laid on a traveling road; a guided traveling control unit configured to make a conveyance vehicle travel along the guide line; a host vehicle position estimation unit configured to detect at least one of a traveled distance and a host vehicle position of the conveyance vehicle; an autonomous traveling control unit configured to make the conveyance vehicle travel to a predetermined target position based on detection information from the host vehicle position estimation unit; and a control switching unit configured to switch, when the traveled distance or the host vehicle position detected by the host vehicle position estimation unit falls within a preset range while traveling of the conveyance vehicle is being controlled by the autonomous traveling control unit, a control mode from traveling control by the autonomous traveling control unit to traveling control by the guided traveling control unit.

(Note 2) When the traveled distance or the host vehicle position detected by the host vehicle position estimation unit falls within the preset range, the conveyance vehicle travels in a predetermined direction until the guide line detection unit detects the guide line.

(Note 3) When the traveled distance or the host vehicle position detected by the host vehicle position estimation unit falls within the preset range, the guide line detection unit executes a detection operation.

(Note 4) The predetermined direction is set to be a direction inclined from a laid direction of the guide line in the preset range, at an angle that is equal to or larger than a first predetermined angle.

(Note 5) The control switching unit switches, when the traveled distance or the host vehicle position detected by the host vehicle position estimation unit falls within the preset range and the guide line detection unit detects the guide line, the control mode from the traveling control by the autonomous traveling control unit to the traveling control by the guided traveling control unit.

(Note 6) When the traveled distance or the host vehicle position detected by the host vehicle position estimation unit falls within the preset range and the guide line detection unit detects the guide line, the guided traveling control unit makes the host vehicle advance until the guide line is positioned at a rotation center of a rotation operation of the host vehicle, and then perform the rotation operation in a rotation direction in which a traveling direction of the host vehicle is shifted toward a direction parallel to a laid direction of the guide line.

(Note 7) When the traveled distance or the host vehicle position detected by the host vehicle position estimation unit falls within the preset range and the guide line detection unit detects the guide line, the guided traveling control unit controls the traveling of the host vehicle to make the guide line fall within a detection range of the guide line detection unit.

(Note 8) The guide line detection unit acquires information on a relative angle between a traveling direction of the host vehicle on a traveling road plane and a laid direction of the guide line, when the traveled distance or the host vehicle position detected by the host vehicle position estimation unit falls within the preset range, the guide line detection unit detects the guide line, and the relative angle is larger than a second predetermined angle, the guided traveling control unit makes the host vehicle advance until the guide line is positioned at a rotation center of a rotation operation of the host vehicle, and then perform the rotation operation in a direction in which the traveling direction of the host vehicle is shifted toward a direction parallel to the laid direction of the guide line, and when the traveled distance or the host vehicle position detected by the host vehicle position estimation unit falls within the preset range, the guide line detection unit detects the guide line, and the relative angle is smaller than the second predetermined angle, the guided traveling control unit controls the traveling of the host vehicle to make the guide line fall within a detection range of the guide line detection unit.

(Note 9) The guide line is formed by a plurality of codes including two-dimensional codes or bar codes, and the guide line detection unit includes a camera configured to acquire an image of the codes, and a code information acquisition unit configured to acquire information on a laid angle of the guide line and a target traveling direction based on image information of the codes included in the acquired image.

(Note 10) An input/output device is provided that is configured to enable a user to input at least one of the preset range and the predetermined direction.

(Note 11) The guide line is formed by a plurality of codes including two-dimensional codes or bar codes, while the conveyance vehicle is being controlled by the autonomous traveling control unit, the guide line detection unit detects the guide line and acquires code information of the codes, and the host vehicle position estimation unit estimates the host vehicle position based on the code information acquired, and the autonomous traveling control unit makes the conveyance vehicle travel while circumventing the object based on the host vehicle position estimated based on the code information.

(Note 12) A conveyance system including: a guide line detection unit configured to detect a guide line laid on a traveling road; a guided traveling control unit configured to make a conveyance vehicle travel along the guide line; a host vehicle position estimation unit configured to detect at least one of a traveled distance and a host vehicle position of the conveyance vehicle; and an autonomous traveling control unit configured to make the conveyance vehicle travel to a predetermined target position based on detection information from the host vehicle position estimation unit, in which the guide line is formed by a plurality of codes including two-dimensional codes or bar codes, while traveling of the conveyance vehicle is being controlled by the autonomous traveling control unit, the guide line detection unit detects the guide line and acquires code information of the codes, and the host vehicle position estimation unit detects the host vehicle position based on the code information acquired, and the autonomous traveling control unit makes the conveyance vehicle travel based on the host vehicle position detected based on the code information.

(Note 13) A conveyance control method including: a guide line detection step of detecting a guide line laid on a traveling road; a guided traveling control step of making a conveyance vehicle travel along the guide line; a host vehicle position estimation step of detecting at least one of a traveled distance and a host vehicle position of the conveyance vehicle; an autonomous traveling control step of making the conveyance vehicle travel to a predetermined target position based on at least one of the traveled distance and the host vehicle position detected in the host vehicle position estimation step; and a control switching step of switching, when the traveled distance or the host vehicle position detected in the host vehicle position estimation step falls within a preset range while traveling of the conveyance vehicle is being controlled in the autonomous traveling control step, a control mode from traveling control in the autonomous traveling control step to traveling control in the guided traveling control step.

(Note 14) A step of making, when the traveled distance or the host vehicle position detected in the host vehicle position estimation step falls within the preset range, the conveyance vehicle travel in a predetermined direction until the guide line is detected in the guide line detection step is further provided.

(Note 15) When the traveled distance or the host vehicle position detected in the host vehicle position estimation step falls within the preset range, a detection operation is executed in the guide line detection step.

(Note 16) In the control switching step, when the traveled distance or the host vehicle position detected in the host vehicle position estimation step falls within the preset range and the guide line is detected in the guide line detection step, the control mode is switched from the traveling control in the autonomous traveling control step to the traveling control in the guided traveling control step.

(Note 17) When the traveled distance or the host vehicle position detected in the host vehicle position estimation step falls within the preset range and the guide line is detected in the guide line detection step, the guided traveling control step makes the host vehicle advance until the guide line is positioned at a rotation center of a rotation operation of the host vehicle, and then perform the rotation operation in a rotation direction in which a traveling direction of the host vehicle is shifted toward a direction parallel to a laid direction of the guide line.

(Note 18) When the traveled distance or the host vehicle position detected in the host vehicle position estimation step falls within the preset range and the guide line is detected in the guide line detection step, in the guided traveling control step, the traveling of the host vehicle is controlled to make the guide line fall within a detection range of the guide line detection unit.

(Note 19) The guide line detection step further includes a step of acquiring information on a relative angle between a traveling direction of the host vehicle on a traveling road plane and a laid direction of the guide line, when the traveled distance or the host vehicle position detected in the host vehicle position estimation step falls within the preset range, the guide line is detected in the guide line detection step, and the relative angle is larger than a second predetermined angle, the guided traveling control step makes the host vehicle advance until the guide line is positioned at a rotation center of a rotation operation of the host vehicle, and then perform the rotation operation in a direction in which the traveling direction of the host vehicle is shifted toward a direction parallel to the laid direction of the guide line, and when the traveled distance or the host vehicle position detected in the host vehicle position estimation step falls within the preset range, the guide line is detected in the guide line detection step, and the relative angle is smaller than the second predetermined angle, in the guided traveling control step, the traveling of the host vehicle is controlled to make the guide line fall within a detection range of the guide line detection operation.

(Note 20) The guide line is formed by a plurality of codes including two-dimensional codes or bar codes, while the conveyance vehicle is being controlled in the autonomous traveling control step, in the guide line detection step, the guide line is detected and code information of the codes is acquired, and in the host vehicle position estimation step, the host vehicle position is estimated based on the code information acquired, and the autonomous traveling control step makes the conveyance vehicle travel while circumventing the object based on the host vehicle position estimated based on the code information.

(Note 21) A conveyance control method including: a guide line detection step of detecting a guide line laid on a traveling road; a guided traveling control step of making a conveyance vehicle travel along the guide line; a host vehicle position estimation step of detecting at least one of a traveled distance and a host vehicle position of the conveyance vehicle; and an autonomous traveling control step of making the conveyance vehicle travel to a predetermined target position based on at least one of the traveled distance and the host vehicle position detected in the host vehicle position estimation step, in which the guide line is formed by a plurality of codes including two-dimensional codes or bar codes, the method further includes a step of detecting a host vehicle position based on the code information acquired by detecting the guide line, and the autonomous traveling control step makes the conveyance vehicle travel based on the host vehicle position detected based on the code information.

### Reference Signs List

10 Conveyance vehicle
11 Coupling unit
12 Object position detection unit
13 Drive wheel
14 Non-drive wheel
16 Guide line detection unit
17 Magnetic sensor
18 Rotation center
110, 130, 140 Guided traveling area
111, 131, 141 Guide line
112, 132, 142, 44 Guided traveling mode start area
113 Branching point
114, 133, 143 Work area
115, 134 Autonomous traveling mode start area
116 Magnetic marker
121, 122 Autonomous traveling area
210 Communication unit
220 Recording unit
230 Detection unit
240 Input unit
250 Display unit
240 Control unit
280 Wheel drive unit
2000 Cart
2010 Coupling receiver
3000 Maneuvering machine
4000 Operation management device
5000 Input/output device
6000 Communication network
7000 External system

## Claims

1. A conveyance system comprising:
a guide line detection unit configured to detect a guide line laid on a traveling road;
a guided traveling control unit configured to make a conveyance vehicle travel along the guide line;
a host vehicle position estimation unit configured to detect at least one of a traveled distance and a host vehicle position of the conveyance vehicle;
an autonomous traveling control unit configured to make the conveyance vehicle travel to a predetermined target position based on detection information from the host vehicle position estimation unit; and
a control switching unit configured to switch, when the traveled distance or the host vehicle position detected by the host vehicle position estimation unit falls within a preset range while traveling of the conveyance vehicle is being controlled by the autonomous traveling control unit, a control mode from traveling control by the autonomous traveling control unit to traveling control by the guided traveling control unit.

2. The conveyance system according to claim 1, wherein when the traveled distance or the host vehicle position detected by the host vehicle position estimation unit falls within the preset range, the conveyance vehicle travels in a predetermined direction until the guide line detection unit detects the guide line.

3. The conveyance system according to claim 1 or 2, wherein when the traveled distance or the host vehicle position detected by the host vehicle position estimation unit falls within the preset range, the guide line detection unit executes a detection operation.

4. The conveyance system according to claim 2 or claim 3, wherein the predetermined direction is set to be a direction inclined from a laid direction of the guide line in the preset range, at an angle that is equal to or larger than a first predetermined angle.

5. The conveyance system according to any one of claims 1 to 4, wherein the control switching unit switches, when the traveled distance or the host vehicle position detected by the host vehicle position estimation unit falls within the preset range and the guide line detection unit detects the guide line, the control mode from the traveling control by the autonomous traveling control unit to the traveling control by the guided traveling control unit.

6. The conveyance system according to any one of claims 1 to 5, wherein when the traveled distance or the host vehicle position detected by the host vehicle position estimation unit falls within the preset range and the guide line detection unit detects the guide line, the guided traveling control unit makes the host vehicle advance until the guide line is positioned at a rotation center of a rotation operation of the host vehicle, and then perform the rotation operation in a rotation direction in which a traveling direction of the host vehicle is shifted toward a direction parallel to a laid direction of the guide line.

7. The conveyance system according to any one of claims 1 to 6, wherein when the traveled distance or the host vehicle position detected by the host vehicle position estimation unit falls within the preset range and the guide line detection unit detects the guide line, the guided traveling control unit controls the traveling of the host vehicle to make the guide line fall within a detection range of the guide line detection unit.

8. The conveyance system according to any one of claims 1 to 7, wherein
the guide line detection unit acquires information on a relative angle between a traveling direction of the host vehicle on a traveling road plane and a laid direction of the guide line,
when the traveled distance or the host vehicle position detected by the host vehicle position estimation unit falls within the preset range, the guide line detection unit detects the guide line, and the relative angle is larger than a second predetermined angle, the guided traveling control unit makes the host vehicle advance until the guide line is positioned at a rotation center of a rotation operation of the host vehicle, and then perform the rotation operation in a direction in which the traveling direction of the host vehicle is shifted toward a direction parallel to the laid direction of the guide line, and
when the traveled distance or the host vehicle position detected by the host vehicle position estimation unit falls within the preset range, the guide line detection unit detects the guide line, and the relative angle is smaller than the second predetermined angle, the guided traveling control unit controls the traveling of the host vehicle to make the guide line fall within a detection range of the guide line detection unit.

9. The conveyance system according to any one of claims 1 to 8, wherein
the guide line is formed by a plurality of codes including two-dimensional codes or bar codes, and
the guide line detection unit includes a camera configured to acquire an image of the codes, and a code information acquisition unit configured to acquire information on a laid angle of the guide line and a target traveling direction based on image information of the codes included in the acquired image.

10. The conveyance system of any one of claims 1 to 9, further comprising an input/output device configured to enable a user to input at least one of the preset range and the predetermined direction.

11. The conveyance system according to any one of claims 1 to 10, wherein
the guide line is formed by a plurality of codes including two-dimensional codes or bar codes,
while the conveyance vehicle is being controlled by the autonomous traveling control unit, the guide line detection unit detects the guide line and acquires code information of the codes, and the host vehicle position estimation unit estimates the host vehicle position based on the code information acquired, and
the autonomous traveling control unit makes the conveyance vehicle travel based on the host vehicle position estimated based on the code information.

12. A conveyance system comprising:
a guide line detection unit configured to detect a guide line laid on a traveling road;
a guided traveling control unit configured to make a conveyance vehicle travel along the guide line;
a host vehicle position estimation unit configured to detect at least one of a traveled distance and a host vehicle position of the conveyance vehicle; and
an autonomous traveling control unit configured to make the conveyance vehicle travel to a predetermined target position based on detection information from the host vehicle position estimation unit, wherein
the guide line is formed by a plurality of codes including two-dimensional codes or bar codes,
while traveling of the conveyance vehicle is being controlled by the autonomous traveling control unit, the guide line detection unit detects the guide line and acquires code information of the codes, and the host vehicle position estimation unit detects the host vehicle position based on the code information acquired, and
the autonomous traveling control unit makes the conveyance vehicle travel based on the host vehicle position detected based on the code information.

13. A conveyance control method comprising:
a guide line detection step of detecting a guide line laid on a traveling road;
a guided traveling control step of making a conveyance vehicle travel along the guide line;
a host vehicle position estimation step of detecting at least one of a traveled distance and a host vehicle position of the conveyance vehicle;
an autonomous traveling control step of making the conveyance vehicle travel to a predetermined target position based on at least one of the traveled distance and the host vehicle position detected in the host vehicle position estimation step; and
a control switching step of switching, when the traveled distance or the host vehicle position detected in the host vehicle position estimation step falls within a preset range while traveling of the conveyance vehicle is being controlled in the autonomous traveling control step, a control mode from traveling control in the autonomous traveling control step to traveling control in the guided traveling control step.

14. The conveyance control method according to claim 13, further comprising a step of making, when the traveled distance or the host vehicle position detected in the host vehicle position estimation step falls within the preset range, the conveyance vehicle travel in a predetermined direction until the guide line is detected in the guide line detection step.

15. The conveyance control method according to claim 13 or 14, wherein when the traveled distance or the host vehicle position detected in the host vehicle position estimation step falls within the preset range, a detection operation is executed in the guide line detection step.

16. The conveyance control method according to any one of claims 13 to 15, wherein in the control switching step, when the traveled distance or the host vehicle position detected in the host vehicle position estimation step falls within the preset range and the guide line is detected in the guide line detection step, the control mode is switched from the traveling control in the autonomous traveling control step to the traveling control in the guided traveling control step.

17. The conveyance control method according to any one of claims 13 to 16, wherein when the traveled distance or the host vehicle position detected in the host vehicle position estimation step falls within the preset range and the guide line is detected in the guide line detection step, the guided traveling control step makes the host vehicle advance until the guide line is positioned at a rotation center of a rotation operation of the host vehicle, and then perform the rotation operation in a rotation direction in which a traveling direction of the host vehicle is shifted toward a direction parallel to a laid direction of the guide line.

18. The conveyance control method according to any one of claims 13 to 17, wherein when the traveled distance or the host vehicle position detected in the host vehicle position estimation step falls within the preset range and the guide line is detected in the guide line detection step, in the guided traveling control step, the traveling of the host vehicle is controlled to make the guide line fall within a detection range of the guide line detection unit.

19. The conveyance control method according to any one of claims 13 to 18, wherein
the guide line detection step further includes a step of acquiring information on a relative angle between a traveling direction of the host vehicle on a traveling road plane and a laid direction of the guide line,
when the traveled distance or the host vehicle position detected in the host vehicle position estimation step falls within the preset range, the guide line is detected in the guide line detection step, and the relative angle is larger than a second predetermined angle, the guided traveling control step makes the host vehicle advance until the guide line is positioned at a rotation center of a rotation operation of the host vehicle, and then perform the rotation operation in a direction in which the traveling direction of the host vehicle is shifted toward a direction parallel to the laid direction of the guide line, and
when the traveled distance or the host vehicle position detected in the host vehicle position estimation step falls within the preset range, the guide line is detected in the guide line detection step, and the relative angle is smaller than the second predetermined angle, in the guided traveling control step, the traveling of the host vehicle is controlled to make the guide line fall within a detection range of the guide line detection operation.

20. The conveyance control method according to any one of claims 13 to 19, wherein
the guide line is formed by a plurality of codes including two-dimensional codes or bar codes,
while the conveyance vehicle is being controlled in the autonomous traveling control step, in the guide line detection step, the guide line is detected and code information of the codes is acquired, and in the host vehicle position estimation step, the host vehicle position is estimated based on the code information acquired, and
the autonomous traveling control step makes the conveyance vehicle travel based on the host vehicle position estimated based on the code information.

21. A conveyance control method comprising:
a guide line detection step of detecting a guide line laid on a traveling road;
a guided traveling control step of making a conveyance vehicle travel along the guide line;
a host vehicle position estimation step of detecting at least one of a traveled distance and a host vehicle position of the conveyance vehicle; and
an autonomous traveling control step of making the conveyance vehicle travel to a predetermined target position based on at least one of the traveled distance and the host vehicle position detected in the host vehicle position estimation step, wherein
the guide line is formed by a plurality of codes including two-dimensional codes or bar codes,
the method further comprises a step of detecting a host vehicle position based on the code information acquired by detecting the guide line, and
the autonomous traveling control step makes the conveyance vehicle travel based on the host vehicle position detected based on the code information.
